# EUROPÄISCHE PATENTANMELDUNG

(11) **EP 4 685 020 A1**
(43) Veröffentlichungstag der Anmeldung: **28.01.2026**
(21) Anmeldenummer: 25155771.6
(22) Anmeldetag: 04.02.2025
(51) Int. Cl.: B60T 7/20, B60T 7/22, B60T 8/17, B60W 30/09, G01S 15/931, G01S 13/931

(54) **VERFAHREN UND SYSTEM ZUR UNTERSTÜTZUNG DES FAHRERS EINES FAHRZEUGS MIT ANHÄNGER BEI DER RÜCKWÄRTSFAHRT**

(30) Priorität: 22.07.2024 DE 102024120689
(71) Anmelder: ASPÖCK Systems GmbH, 4722 Peuerbach (AT)
(72) Erfinder: HINTERBERGER, Michael, 4712 Michaelnbach (AT)
(74) Vertreter: Söllner, Udo

(57) **Zusammenfassung**

Die Erfindung schafft ein Verfahren zur Unterstützung des Fahrers eines Fahrzeugs (1) mit Anhänger (2) bei der Rückwärtsfahrt, bei dem der Abstand eines Hecks (6) des Anhängers (2) zu einem Hindernis (9) mittels eines am Anhänger (2) vorgesehenen Sensors (3) festgestellt und in Abstandsklassen (12, 14, 15) unterteilt sowie ausgewertet wird und in Abhängigkeit von dem Abstand die Geschwindigkeit des Fahrzeugs (1) automatisch beeinflusst wird und mittels mindestens einer am Anhänger (2) vorgesehenen Beleuchtungseinrichtung (7) ein optisches Signal ausgegeben wird, welches durch unterschiedliche Blinkfrequenzen den verbleibenden Abstand zum Hindernis (9) repräsentiert, wobei beim Erreichen eines ersten Abstandswerts zum Hindernis (9) die Betriebsbremse des Anhängers (2) zur Bereitstellung einer ersten Bremskraft angesteuert wird und mit kleiner werdendem Abstand zum Hindernis (9) die Betriebsbremse des Anhängers (2) zur Bereitstellung zunehmender Bremskraft angesteuert wird und bei der Rückwärtsfahrt ein Detektionsbereich (16) hinterhalb des Hecks (6) des Anhängers (2) auf bewegliche Objekte (17) überwacht wird und bei der Erfassung eines beweglichen Objekts (17) in dem Detektionsbereich (16) die Betriebsbremse des Anhängers (2) zur Herbeiführung einer Notbremsung des Fahrzeugs (1) mit Anhänger (2) angesteuert wird.

## Beschreibung

Die vorliegende Erfindung betrifft ein Verfahren zur Unterstützung des Fahrers eines Fahrzeugs mit Anhänger bei der Rückwärtsfahrt nach dem Oberbegriff des Anspruchs 1. Die Erfindung betrifft darüber hinaus auch ein System zur Durchführung des Verfahrens nach dem Oberbegriff des Anspruchs 14.

Bei dem genannten Fahrzeug kann es sich beispielsweise um einen Lastkraftwagen als Zugfahrzeug handeln, an dessen Heck ein Anhänger angeordnet ist oder beispielsweise auch um einen Sattelschlepper mit Anhänger. Wenn ein solches Fahrzeug mit Anhänger beispielsweise zum Beladen oder Entladen an eine Laderampe manövriert werden soll, dann befindet sich hinter dem Anhänger ein großer, für den Fahrer des Fahrzeugs nicht einsehbarer Bereich.

Auch besteht beim Anfahren der Laderampe die Gefahr einer Kollision des Anhängers mit der Laderampe, welche üblicherweise zu einer Beschädigung des Heckbereichs des Anhängers führt, mit der die Notwendigkeit des Austauschs von am Heck des Anhängers beschädigter Beleuchtungseinrichtungen einhergeht.

Anhand der Druckschrift EP 0 972 679 B1 sind ein Verfahren und eine Einrichtung zur Unterstützung des Fahrers eines Fahrzeugs bei Rückwärtsfahrt bekannt geworden. Bei dieser bekannten Einrichtung wird das Einlegen des Rückwärtsgangs des Fahrzeugs durch die Überwachung eines Rückwärtsfahrsignals eines Getriebes des Fahrzeugs überwacht und daraufhin der Abstand des Fahrzeugs einem Hindernis in der Form einer Laderampe überwacht und die Geschwindigkeit des Fahrzeugs in Abhängigkeit von dem Abstandssignal automatisch beeinflusst. Der vom Abstandssignal abgeleitete Abstand zum Hindernis wird in drei Zonen unterteilt, nämlich eine erste Zone, bei der das Abstandssignal einen Abstand von größer drei Meter repräsentiert und einer zweiten Zone, bei der das Abstandssignal einen Abstand zwischen einem und drei Metern repräsentiert und einer dritten Zone, bei der das Abstandssignal einen Abstand von weniger als einem Meter repräsentiert.

Anhand der Druckschrift DE 10 2011 000 668 C5 ist ein als "Soft Docking" bezeichnetes Verfahren zur Unterstützung eines Fahrers beim Andocken an eine Rampe bekannt geworden, bei dem ein Abstand eines Nutzfahrzeugs von der Rampe während des Rückwärtsfahrtbetriebs durch ein Infrarotsystem erfasst wird.

Wenn der Abstand des Nutzfahrzeugs von der Rampe kleiner als ein erster Schwellenwert ist, wird dies dem Fahrer des Nutzfahrzeugs über ein optisches und/oder akustisches Signal zur Kenntnis gebracht. Verringert sich der erfasste Abstand anschließend auf weniger als einen zweiten Schwellenwert, wird eine Frequenz eines optischen Signals erhöht, um dem Fahrer den verringerten Abstand von der Rampe zur Kenntnis zu bringen. Unterschreitet der Abstand einen dritten Schwellenwert, so erfolgt ein automatisierter Bremseingriff, was durch eine elektrische Ansteuerung der elektrisch angesteuerten Bremsanlage des Nutzfahrzeugs erfolgen kann. Unterschreitet schließlich der Abstand einen vierten Schwellenwert, erfolgt ein automatisierter Bremseingriff derart, dass das Nutzfahrzeug für einen vorgegebenen Abstand zum Stillstand kommt. Ein solcher Stillstand wird über die Bremsanlage des Nutzfahrzeugs für zwei Sekunden aufrechterhalten, daran schließt sich für den letzten Schritt das Andocken an, dass dieses Andocken ohne automatisierten Eingriff in die Bremsanlage des Nutzfahrzeugs erfolgt.

Die Rückwärtsfahrt eines Fahrzeugs mit einem Anhänger ist für den Fahrer regelmäßig ein schwieriger Vorgang, der hohe Aufmerksamkeit und hohe Konzentration erfordert, was insbesondere für Lastkraftwagen mit einem Anhänger und Sattelschlepper mit einem Sattelauflieger als Anhänger gilt. Dies gilt umso mehr, wenn die Rückwärtsfahrt zielgenau stattfinden muss, also beispielsweise bei der Anfahrt mit dem Anhänger oder dem Sattelauflieger an eine Rampe oder Laderampe, da hierbei immer die Gefahr der Kollision des Anhängers oder Sattelaufliegers mit der Rampe einhergeht.

Ausgehend hiervon liegt der vorliegenden Erfindung die Aufgabe zugrunde, ein Verfahren zur Unterstützung des Fahrers eines Fahrzeugs mit Anhänger bei der Rückwärtsfahrt zu schaffen, welches einerseits den Fahrer entlastet und andererseits auch das allgemeine Gefährdungspotenzial reduziert, welches mit der Rückwärtsfahrt einhergeht, da bei der Rückwärtsfahrt der unmittelbare Bereich hinter dem Heck des Anhängers für den Fahrer nicht einsehbar ist. Auch soll ein System zur Durchführung des Verfahrens geschaffen werden, welches den Fahrer entlastet.

Die Erfindung weist zur Lösung dieser Aufgabe hinsichtlich des Verfahrens die im Anspruch 1 angegebenen Merkmale auf, vorteilhafte Ausgestaltungen hiervon sind in den weiteren Ansprüchen beschrieben. Darüber hinaus weist die Erfindung hinsichtlich des Systems die im Anspruch 14 angegebenen Merkmale auf, vorteilhafte Ausgestaltungen des Systems sind in den weiteren Ansprüchen beschrieben.

Die Erfindung schafft ein Verfahren zur Unterstützung des Fahrers eines Fahrzeugs mit Anhänger bei der Rückwärtsfahrt, bei dem der Abstand eines Hecks des Anhängers zu einem Hindernis mittels eines am Anhänger vorgesehenen Sensors festgestellt und in Abstandsklassen unterteilt sowie ausgewertet wird und in Abhängigkeit von dem Abstand die Geschwindigkeit des Fahrzeugs automatisch beeinflusst wird und mittels mindestens einer am Anhänger vorgesehenen Beleuchtungseinrichtung ein optisches Signal ausgegeben wird, welches durch unterschiedliche Blinkfrequenzen den verbleibenden Abstand zum Hindernis repräsentiert, wobei beim Erreichen eines ersten Abstandswerts zum Hindernis die Betriebsbremse des Anhängers zur Bereitstellung einer ersten Bremskraft angesteuert wird und mit kleiner werdendem Abstand zum Hindernis die Betriebsbremse des Anhängers zur Bereitstellung zunehmender Bremskraft angesteuert wird und bei der Rückwärtsfahrt ein Detektionsbereich hinterhalb des Hecks des Anhängers auf bewegliche Objekte überwacht wird und bei der Erfassung eines beweglichen Objekts in dem Detektionsbereich die Betriebsbremse des Anhängers zur Herbeiführung einer Notbremsung des Fahrzeugs mit Anhänger angesteuert wird.

Bei dem Anhänger kann es sich beispielsweise um einen Anhänger mit nur einer Achse oder auch mehr als einer Achse handeln, es kann sich auch um einen Sattelauflieger oder dergleichen handeln.

Am Heck des Anhängers oder im Heckbereich des Anhängers kann ein Sensor beispielsweise in der Form eines Radarsensors angeordnet sein, der zur Messung seines Abstands und damit des Abstands des Orts der Anbringung des Sensors am Heck des Fahrzeugs zu einem Hindernis verwendet werden kann, wobei es sich bei dem Hindernis beispielsweise um eine Rampe oder eine Laderampe handeln kann, wie dies vorstehend erläutert wurde.

Die Geschwindigkeit des Fahrzeugs mit Anhänger bei der Rückwärtsfahrt wird in Abhängigkeit des festgestellten Abstands zum Hindernis automatisch beeinflusst, was nach der erfindungsgemäßen Lehre durch eine Aktivierung der Betriebsbremse des Anhängers stattfindet, wie dies nachfolgend noch näher erläutert werden wird.

Daneben ist es nach dem erfindungsgemäßen Verfahren auch vorgesehen, dass der jeweilige Abstand zum Hindernis auch mittels einer am Anhänger vorgesehenen Beleuchtungseinrichtung mittels eines optischen Signals ausgegeben wird, welches durch unterschiedliche Blinkfrequenzen den verbleibenden Abstand zum Hindernis anzeigt. Dieses optische Signal kann vom Fahrer visuell zur Kenntnis genommen werden und beispielsweise von am Heck des Anhängers vorgesehenen Umrissbegrenzungsleuchten oder einer anderen Leuchte ausgegeben werden.

Es ist nach dem erfindungsgemäßen Verfahren vorgesehen, dass beim Erreichen eines ersten Abstandswerts oder Abstands zum Hindernis die Betriebsbremse des Anhängers zur Bereitstellung einer ersten Bremskraft angesteuert wird.

Bei der Betriebsbremse des Anhängers kann es sich beispielsweise um eine mittels Druckluft oder einem anderen Medium betätigte Bremse handeln, welche von einem elektronischen Steuergerät, welches vorzugsweise am Anhänger angeordnet ist, so angesteuert wird, dass der Anhänger eine erste Bremskraft aufbaut.

Der Anhänger befindet sich in Wirkverbindung mit dem Fahrzeug oder Zugfahrzeug verbunden. Bei der Rückwärtsfahrt übt also das Fahrzeug oder Zugfahrzeug eine Antriebskraft aus, welche auf den Anhänger aktiv übertragen wird, um den Anhänger in Richtung des Hindernisses, bei dem es sich um eine Rampe oder eine Laderampe oder eine Anfahrrampe handeln kann, zu bewegen.

Die vom Anhänger aufgebaute erste Bremskraft wirkt also der Antriebskraft des Fahrzeugs oder Zugfahrzeugs entgegen, da das Fahrzeug oder Zugfahrzeug weiterhin die Antriebskraft auf den Anhänger überträgt. Die Bremskraft wird also vom Anhänger über eine Anhängerkupplung oder Sattelkupplung als Reaktionskraft auf das Fahrzeug oder Zugfahrzeug übertragen, in dem der Fahrer bei der Rückwärtsfahrt in einer Fahrerkabine sitzt.

Diese Reaktionskraft wirkt der durch die Antriebskraft des Fahrzeugs erzeugten Bewegungsrichtung entgegen, was dazu führt, dass der in der Fahrerkabine sitzende Fahrer den Aufbau der Reaktionskraft unmittelbar als haptische Warnfunktion wahrnimmt. Der Fahrer nimmt dabei diese Reaktionskraft automatisch wahr, da diese Reaktionskraft zu einem Kraftimpuls führt, welcher vom Fahrer insbesondere im Kopfbereich und Nackenbereich wahrgenommen wird.

Der Aufbau der Bremskraft durch die Betriebsbremse des Anhängers führt also zu einem haptischen Hinweis an den Fahrer des Fahrzeugs, den dieser automatisch wahrnimmt, ohne dass er sich auf die Wahrnehmung des Hinweises konzentrieren muss, ohne dass er also zur Kenntnisnahme des Hinweises seine Sinnesorgane Augen oder Ohren benutzen muss. Im Umkehrschluss bedeutet dies, dass diese Sinnesorgane Augen und Ohren für anderweitige Hinweise zur Verfügung stehen und etwaige, von den Augen und Ohren des Fahrers wahrgenommene Sinneswahrnehmungen, welche mit der Rückwärtsfahrbewegung des Fahrzeugs mit Anhänger verbunden sind, von dem angesprochenen haptischen Hinweis bestätigt werden. Es kommt also zu einer Hinweisbestätigung oder Signalbestätigung für den Fahrer, was dessen Sicherheitsgefühl bei der komplexen Rückwärtsfahrt erhöht und gleichzeitig dafür sorgt, dass der Fahrer des Fahrzeugs durch die Wahrnehmung des haptischen Hinweises davon Kenntnis erfährt, dass sich das Heck des Anhängers noch in einem vorbestimmten, der ersten Bremskraft entsprechenden ersten Abstand zum Hindernis befindet. Zur Kenntnis dieses ersten Abstands zum Hindernis muss der Fahrer daher nicht auf eine den ersten Abstand anzeigende Anzeigevorrichtung, beispielsweise ein Display im Armaturenbrett des Fahrzeugs sehen, sondern erfährt Kenntnis vom ersten Abstand ohne die Benutzung seiner Sinnesorgane Augen und Ohren.

Es hat sich überraschend gezeigt, dass diese haptische Warnfunktion das Sicherheitsempfinden des Fahrers bei der Rückwärtsfahrt an eine Laderampe oder ein anderes Hindernis wesentlich erhöht.

Die erste Bremskraft entspricht dabei einem an ein elektronisches Bremssystem EBS des Anhängers übermittelten Zieldruck oder Bremsdruck von beispielsweise 0,8 bar. Wenn der Anhänger eine diesem Bremsdruck entsprechende Bremskraft aufbaut, dann wird die am Fahrzeug oder Zugfahrzeug angeordnete Kupplungseinrichtung, mit der der Anhänger mit dem Zugfahrzeug gekoppelt ist, also beispielsweise eine Anhängerkupplung oder eine Sattelkupplung, auf die am Anhänger vorgesehene Kupplungsvorrichtung, also beispielsweise eine Deichsel oder ein Zugrohr geschoben, was zum Aufbau der Reaktionskraft führt, welche auf den Fahrer übertragen wird und zu einer von diesem wahrnehmbaren geringfügigen Auslenkung seines Kopfes führt und damit zum haptischen Hinweis, der dem ersten Abstand des Hecks oder Sensors des Anhängers zum Hindernis entspricht.

Fahrerkabinen sind am Fahrzeug oder Zugfahrzeug oftmals mittels Federeinrichtungen angeordnet, um die Fahrerkabine von Fahrbahnunebenheiten und dergleichen komfortsteigernd zu trennen oder zu isolieren. Diese Federeinrichtungen führen beim Aufbau der genannten Reaktionskraft dazu, dass die haptische Warnfunktion vom Fahrer verstärkt wahrgenommen wird, also eine deutliche Verstärkung des haptischen Warnsignals erzielt werden kann.

Solange sich der mittels des Sensors ermittelte Abstand des Hecks des Anhängers vom Hindernis in einem Bereich befindet, der einer ersten Abstandsklasse entspricht, wird die erste Bremskraft bei Fortführung der Rückwärtsfahrt in gleicher Höhe aufrechterhalten.

Wenn dann der Abstand des Hecks des Anhängers zum Hindernis bei der Fortführung der Rückwärtsfahrt einen Wert annimmt, der einer zweiten Abstandsklasse entspricht, also der Abstand kleiner ist als ein der ersten Abstandsklasse zugeordnete Abstand, dann wird nach dem erfindungsgemäßen Verfahren die Bremskraft des Anhängers zu einer zweiten Bremskraft erhöht und in Höhe der zweiten Bremskraft aufrechterhalten, solange der aktuell gemessene Abstand zum Hindernis der zweiten Abstandsklasse entspricht.

Die Erhöhung der Bremskraft beim Erreichen des der zweiten Abstandsklasse entsprechenden Abstand führt wieder zu einem haptischen Warnhinweis an den Fahrer, da die zweite höhere Bremskraft wieder zu einer entsprechenden Reaktionskraft führt, die vom Fahrer haptisch wahrgenommen wird, ohne dass er hierzu seine Sinnesorgane Augen und Ohren benutzen muss. Wenn die Reaktionskraft also von der ersten Reaktionskraft zur zweiten Reaktionskraft ansteigt, weiß der Fahrer durch den haptisch wahrgenommenen Hinweis, dass sich das Heck des Anhängers in einem kleineren Abstand zum Hindernis befindet, nämlich einem der zweiten Abstandsklasse entsprechenden Abstand.

Diese Vorgehensweise kann nach dem erfindungsgemäßen Verfahren durch die Aufnahme weiterer Abstandsklassen feiner unterteilt werden, derart, dass der Fahrer beim Erreichen einer jeweiligen weiteren Abstandsklasse einen entsprechenden haptischen Hinweis durch den Aufbau einer der weiteren Abstandsklasse entsprechenden Bremskraft durch den Anhänger erfährt.

Nach einer bevorzugten Ausführungsform des erfindungsgemäßen Verfahrens umfasst die Unterteilung des Abstands in Abstandsklassen eine Einrichtung einer dritten Abstandsklasse dergestalt, dass der relativ zum Hindernis verglichen mit dem zweiten Abstand festgestellte dritte Abstand, der kleiner ist als der erste und der zweite Abstand dazu führt, dass eine dritte Bremskraft durch eine entsprechende Ansteuerung des elektronischen Bremssystems des Anhängers wiederum zu einem entsprechenden haptisch wahrnehmbaren Hinweis für den Fahrer führt.

Das erfindungsgemäße Verfahren sieht auch vor, dass bei der Rückwärtsfahrt ein Detektionsbereich hinterhalb des Hecks des Anhängers auf bewegliche Objekte überwacht wird und bei der Erfassung eines beweglichen Objekts in dem Detektionsbereich die Betriebsbremse des Anhängers zur Herbeiführung einer Notbremsung des Fahrzeugs mit Anhänger angesteuert wird.

Diese Vorgehensweise ist insbesondere auf großen Ladehöfen und anderen Flächen von Vorteil, auf denen eine Rückwärtsfahrt des Fahrzeugs mit Anhänger durchgeführt wird, da auf solchen Ladehöfen und Flächen oftmals auch ein Verkehr anderer Teilnehmer stattfindet, wie beispielsweise kleiner Shuttles oder auch automatisiert betriebener Fahrzeuge.

Durch den eingeschränkten Sichtbereich hinter dem Anhänger stellt das Rückwärtsfahren oftmals eine gefährliche Fahrsituation dar.

Nach dem erfindungsgemäßen Verfahren wird bei der Rückwärtsanfahrt in einem Detektionsbereich, der beispielsweise der Breite der Fahrspur des Anhängers entspricht und beidseitig aber auch erweitert werden kann, ein Objekt anhand der Größe und/oder der Geschwindigkeit des Objekts erkannt und nach dessen Erkennung eine Notbremsung des Fahrzeugs mit Anhänger eingeleitet, indem die Betriebsbremse des Anhängers zur Notbremsung angesteuert wird und optional in diesem Fall auch die Betriebsbremse des Fahrzeugs oder Zugfahrzeugs zur Notbremsung angesteuert wird.

Der Detektionsbereich kann sich im Rückwärtsfahrbereich des Hecks des Anhängers angeordnet befinden und hinsichtlich seiner Breitenerstreckung der Breite der Fahrspur des Anhängers entsprechen oder auch breiter sein als die Fahrspur des Anhängers. Das erfindungsgemäße Verfahren sieht auch vor, dass der Detektionsbereich in Rückwärtsfahrtrichtung des Hecks des Anhängers eine größere Längserstreckung aufweist als der Bereich hinterhalb des Hecks des Fahrzeugs, der zur Messung des Abstands des Hecks des Fahrzeugs zu einem Hindernis herangezogen wird. Damit wird der Bereich der Querverkehrserkennung hinterhalb des Hecks des rückwärts fahrenden Anhängers vergrößert und somit das Sicherheitsempfinden des Fahrers beim Rückwärtsfahren gesteigert.

Wie es vorstehend erläutert wurde, wird der jeweils gemessene aktuelle Abstand des Hecks des Anhängers zum Hindernis in Abstandsklassen eingeteilt, innerhalb derer die jeweilige vom Anhänger aufgebaute Bremskraft auf einem gleichen Niveau gehalten wird. Diese Vorgehensweise hat den Vorteil, dass der Fahrer des Fahrzeugs das Eintreten des Abstands in die jeweilige Abstandsklasse durch den beim Eintreten sprunghaften Anstieg der Bremskraft, welche vom Anhänger aufgebaut wird, haptisch deutlich feststellen kann, da der Anstieg der Bremskraft durch den Anhänger gleichsam zu einem leichten Ruck oder Stoß führt, den er dadurch feststellen kann, dass der Fahrer ein leichte Nickbewegung oder Schwenkbewegung seines Kopfes beziehungsweise Nackens vernimmt, ohne dass dies störend wirkt.

Durch diese leichte Nickbewegung oder Schwenkbewegung erfährt der Fahrer eine haptische Rückmeldung darüber, dass der Abstand des Hecks des Anhängers zum Hindernis einer jeweiligen Abstandsklasse entspricht.

Es ist nach einer Weiterbildung der Erfindung vorgesehen, dass innerhalb einer Abstandsklasse die jeweilige Bremskraft beibehalten wird und beim Wechsel zur Abstandsklasse mit kleinerem Abstand zum Hindernis als dem ersten Abstandswert oder Abstand die Betriebsbremse des Anhängers zur Bereitstellung einer höheren Bremskraft angesteuert wird.

Wenn das Fahrzeug mit dem Anhänger rückwärts gefahren wird und der vom Sensor gemessene Abstand des Hecks des Anhängers zum Hindernis einen vorbestimmten Abstand aufweist, der beispielsweise fünf Meter bis sieben Meter zum Hindernis beträgt und damit der Abstand innerhalb der ersten Abstandsklasse von 5 bis 7 Meter entspricht, wird bei kleiner werdendem Abstand und beim Eintreten des aktuell gemessenen Abstands in die erste Abstandsklasse, also dann, wenn der aktuell gemessene Abstand sieben Meter beträgt, die erste Bremskraft des Anhängers aufgebaut.

Diese Bremskraft wird dann bei kleiner werdendem Abstand innerhalb der ersten Abstandsklasse aufrechterhalten. Es ist nach der Erfindung auch vorgesehen, dass die erste Abstandsklasse einem aktuell gemessenen Abstand zum Hindernis von beispielsweise 1,5 bis 5 Meter entspricht, sodass die erste Bremskraft erst dann aufgebaut wird, wenn der aktuell gemessene Abstand des Hecks des Anhängers zum Hindernis fünf Meter beträgt.

Diese erste Bremskraft entspricht beispielsweise der Bremskraft, die der Anhänger aufbaut, wenn die Betriebsbremse des Anhängers mit einem konstanten Druck von etwa 0.8 bar angesteuert wird.

Wenn dann der aktuelle Abstand des Hecks des Anhängers zum Hindernis kleiner wird, und der Abstand in eine zweite Abstandsklasse eintritt, welche beispielsweise von null Meter bis 1,5 Meter erreicht, dann wird die Betriebsbremse des Anhängers zum Aufbau einer zweiten, höheren Bremskraft als die erste Bremskraft angesteuert, was beispielsweise dadurch erreicht wird, dass die Betriebsbremse des Anhängers mit einem konstanten Druck von etwa 3,5 bar angesteuert wird.

Den Übergang der Bremskraft von der ersten Bremskraft zur zweiten Bremskraft kann der Fahrer wieder haptisch wahrnehmen, da der Anstieg der Bremskraft von der ersten Bremskraft zur zweiten Bremskraft wieder zu einem leichten, aber nicht störenden Ruck führt, den der Fahrer wieder durch eine leichte Bewegung seines Kopfes oder Nackenbereichs feststellt. Durch diese haptische Rückmeldung weiß der Fahrer dann, dass das Heck des Anhängers dem Hindernis näher gekommen ist.

Durch eine weitere Unterteilung des aktuell gemessenen Abstands des Hecks vom Hindernis in weitere Abstandsklassen und eine weitere Erhöhung der Bremskraft des Anhängers beim Eintreten des Abstands in die nächste Abstandsklasse kann die Anfahrbewegung oder Andockbewegung des Anhängers an die Rampe oder Laderampe dem Fahrer des Fahrzeugs haptisch mitgeteilt werden.

Es hat sich gezeigt, dass oftmals das Unterteilen des aktuellen gemessenen Abstands in nur zwei Abstandsklassen, nämlich eine erste Abstandsklasse von 1,5 bis 5 Meter und eine zweite Abstandsklasse von 0 bis 1,5 Meter ausreichend ist für eine rasche und fehlerfreie Anfahrt des Hecks des Anhängers zur Rampe oder Laderampe. Die haptische Mitteilung des in Abstandsklassen unterteilten Abstands an den Fahrer führt rasch zu einer routinierten Anfahrt der Rampe oder Laderampe durch den Fahrer.

Eine der ersten Abstandsklasse vorgelagerte Abstandsklasse kann beispielsweise einem aktuell gemessenen Abstand des Hecks des Anhängers vom Hindernis im Bereich von fünf Meter bis sieben Meter betragen. Innerhalb dieser Abstandsklasse kann es ausreichend sein, wenn das Erreichen des Hecks des Anhängers dieser Abstandsklasse dem Fahrer durch einen optischen Hinweis mitgeteilt wird, beispielsweise einem konstanten Blinken mit einer Blinkfrequenz der Beleuchtungseinrichtung am Heck des Anhängers von einem Hertz. Hierdurch erfährt der Fahrer schon einen optischen Hinweis dahingehend, dass sich das Heck des Anhängers dem Hindernis nähert und derzeit der Abstand zum Hindernis 5 bis 7 Meter beträgt. Wird der Abstand dann kleiner, tritt der aktuell gemessene Abstand in die erste Abstandsklasse ein und die Betriebsbremse des Anhängers wird zum Aufbau einer ersten Bremskraft angesteuert beziehungsweise aktiviert.

Es ist nach einer Weiterbildung der Erfindung vorgesehen, dass die Feststellung des Abstands zum Hindernis innerhalb eines Bereichs hinter dem Heck des Anhängers durchgeführt wird, der eine Breite aufweist, welche weitgehend der Breite der Fahrspur des Anhängers entspricht.

Durch diese Vorgehensweise wird die Problematik verhindert, dass der am Heck des Anhängers angeordnete Sensor etwaige Objekte weit außerhalb des gewünschten Bereichs hinter dem Heck des Anhängers erfasst und sodann eine Aktivierung der Betriebsbremse des Anhängers durchgeführt wird, ohne dass hierfür eine Notwendigkeit besteht.

Es ist nach einer Weiterbildung der Erfindung auch vorgesehen, dass der auf bewegliche Objekte hinterhalb des Hecks des Anhängers überwachte Detektionsbereich in Breitenrichtung und/oder in Längsrichtung größer ist als der Bereich hinterhalb des Hecks des Anhängers, innerhalb dessen der Abstand zu einem Hindernis festgestellt wird, sodass die Überwachung auf bewegliche Objekte bei der Rückwärtsfahrt des Anhängers bereits vor dem Erreichen des ersten Abstandswerts stattfindet. Der erste Abstandswert entspricht dem Abstand, nach dessen Erreichen der aktuell gemessene Abstand in eine erste Abstandsklasse eintritt.

Die Überwachung des Detektionsbereichs hinterhalb des Hecks des Anhängers auf bewegliche Objekte bereits zu einem Zeitpunkt, bei dem das Heck des Anhängers noch nicht in die erste Abstandsklasse eingetreten ist, erhöht das Sicherheitsempfinden des Fahrers bei der Rückwärtsfahrt an die Laderampe wesentlich.

Durch diese Überwachung des Detektionsbereichs auf bewegliche Objekte wird eine Querverkehrserkennung realisiert, welche in einem Bereich hinterhalb des Hecks des Anhängers stattfindet, der breiter und/oder länger ist als der Bereich, innerhalb dessen die Abstandsmessung des Hecks des Anhängers zum Hindernis stattfindet. Der Fahrer des Fahrzeugs erfährt daher schon bei der Anfahrt in den Messbereich des Abstands zur Laderampe eine Erhöhung seines Sicherheitsempfindens, da die Erfassung eines beweglichen Objekts im Detektionsbereich zu einer automatischen Notbremsung des Fahrzeugs mit Anhänger führt, noch bevor die Messung des Abstands des Hecks des Anhängers zu einem Aufbau einer ersten Bremskraft durch den Anhänger führt.

Es ist nach einer Weiterbildung des erfindungsgemäßen Verfahrens vorgesehen, dass ein bewegliches Objekt in Abhängigkeit der vertikalen Höhe des Objekts und/oder der Relativgeschwindigkeit des Objekts als bewegliches Objekt erkannt wird.

Bei dem Sensor zur Messung des Abstands des Hecks des Anhängers zu einem Hindernis kann es sich um einen Radarsensor handeln, wie dies vorstehend bereits erläutert wird. Dieser Sensor wird auch zur Detektion eines beweglichen Objekts herangezogen und das Verfahren nach der Erfindung sieht vor, dass die Empfindlichkeit des Sensors zur Detektion eines beweglichen Objekts eingestellt werden kann derart, dass ein bewegliches Objekt eine vertikale Mindesthöhe oder Mindestgröße aufweisen muss und/oder eine Mindestrelativgeschwindigkeit relativ zum rückwärts fahrenden Anhänger aufweisen muss, um als bewegliches Objekt detektiert zu werden. Damit können Fehlerfassungen vermieden werden, wie beispielsweise die Erfassung eines beim Rückwärtsfahren des Anhängers durch den Detektionsbereich fliegenden Vogels als bewegliches Objekt, da die Erfassung eines solchen beweglichen Objekts zur Notbremsung des Fahrzeugs mit Anhänger führt.

Wenn vom Radarsensor beispielsweise ein durch den Detektionsbereich fliegender Vogel erfasst wird, soll dies natürlich nicht zu einer Notbremsung des Fahrzeugs mit Anhänger führen.

Es ist nach einer Weiterbildung der Erfindung auch vorgesehen, dass bei der Feststellung eines Hindernisses in einer Abstandsklasse ein sich in Abhängigkeit von der Abstandsklasse veränderndes optisches Signal mittels der Beleuchtungseinrichtung ausgegeben wird.

Damit kann dem Fahrer des Fahrzeugs beim Rückwärtsfahren mit dem Anhänger auch optisch signalisiert werden, in welcher Abstandsklasse sich das Heck des Anhängers gerade befindet. Die optische Visualisierung der Abstandsklasse führt zu einer Erhöhung des Sicherheitsempfindens des Fahrers beim Rückwärtsfahren mit dem Anhänger und dient gleichzeitig einer Signalbestätigung dahingehend, dass der Fahrer gleichsam das in Kürze eintretende haptische Warnsignal erwarten kann und nach dem Auftreten des haptischen Warnsignals zu einer Funktionsbestätigung nämlich dahingehend, dass das den Fahrer beim Rückwärtsfahren mit dem Anhänger unterstützende System ordnungsgemäß arbeitet.

Die optische Visualisierung durch eine beispielsweise mit unterschiedlichen Blinkfrequenzen arbeitende Beleuchtungseinrichtung im Bereich des Hecks des Anhängers kann auch dazu herangezogen werden, dem Fahrer zu visualisieren, dass die Querverkehrserkennung bestimmungsgemäß arbeitet, nämlich beispielsweise dadurch, dass beim Einlegen des Rückwärtsvorgangs des Fahrzeugs eine vorbestimmte Signalfrequenz der Beleuchtungseinrichtung erfolgt, die dem Fahrer signalisiert, dass die Querverkehrserkennung eingeschaltet ist.

Es ist nach einer Weiterbildung der Erfindung auch vorgesehen, dass bei der Feststellung eines beweglichen Objekts im Detektionsbereich ein akustisches Signal ausgegeben wird, welche sich von einem akustischen Signal bei der Rückwärtsfahrt unterscheidet.

Ein bekanntes System, welches bei der Rückwärtsfahrt eines Fahrzeugs mit einem Anhänger ein akustisches Signal abgibt, welches der Umgebung der Rückwärtsfahrt akustisch signalisiert, unterscheidet sich nach der Erfindung von einem Warnsignal, welches nach dem erfindungsgemäßen Verfahren ausgegeben wird, wenn ein bewegliches Objekt im Detektionsbereich festgestellt wird. Dieses akustische Signal kann beispielsweise von einem Signalgeber bereitgestellt werden, der beispielsweise in der Nähe des Sensors am Heck des Anhängers angeordnet wird und einen spezifischen, beispielsweise trillernden akustischen Warnton emittiert, wenn ein bewegliches Objekt im Detektionsbereich erfasst wird. Dieses Trillersignal ist gleichzeitig ein Warnton für das bewegliche Objekt, bei dem es sich beispielsweise um kleines Transportfahrzeug handeln kann, welches von einem unachtsamen Benutzer gesteuert wird, der hinter dem rückwärts fahrenden Anhänger noch schnell hindurch fahren möchte. Da eine solche Situation ein erhebliches Gefährdungspotenzial aufweist, wird sowohl der unachtsame Benutzer als auch der Fahrer des Fahrzeugs mit Anhänger durch den akustischen Warnton über die gefährliche Situation informiert und gleichzeitig wird die Notbremsung des Fahrzeugs mit Anhänger durchgeführt.

Es ist nach einer Weiterbildung des erfindungsgemäßen Verfahrens auch vorgesehen, dass bei der Feststellung eines Abstands zum Hindernis entsprechend einer Abstandsklasse mit geringstem Abstand zum Hindernis die Betriebsbremse des Anhängers zur Bereitstellung einer höheren Bremskraft als in anderen Abstandklassen angesteuert wird und diese höhere Bremskraft für eine vorbestimmte Zeitdauer aufrechterhalten wird und die höhere Bremskraft nach Ablauf der vorbestimmten Zeitdauer auf eine niedrigere Bremskraft reduziert wird oder die Bremskraft aufgehoben wird.

Wenn sich das Heck des Anhängers bereits in einem solchen Abstand zum Hindernis befindet, dass dieser Abstand einer letzten Abstandsklasse mit geringstem Abstand oder kleinstem Abstand zum Hindernis entspricht, also einer Abstandsklasse nach der bei einer Weiterfahrt des Anhängers in Rückwärtsfahrtrichtung keine weitere Unterteilung der Abstandsklassen mehr stattfindet, kann die der letzten Abstandsklasse entsprechende Bremskraft für eine vorbestimmte Zeitdauer aufrechterhalten werden, wobei die Bremskraft auch so hoch sein kann, dass das Fahrzeug mit Anhänger zum Stillstand gekommen ist.

Nach Ablauf der vorbestimmten Zeitdauer kann dann die Bremskraft beispielsweise durch lineares Absenken des Bremsdrucks reduziert werden, was wiederum durch ein akustisches Signal vom Fahrer des Fahrzeugs festgestellt wird, da es im Absenken des Bremsdrucks üblicherweise zu einem Entweichen von Druckluft aus der Betriebsbremse des Anhängers kommt, was vom Fahrer des Fahrzeugs akustisch wahrgenommen wird. Dieses akustische Wahrnehmen des Absenkens des Betriebsdrucks der Betriebsbremse des Anhängers dient dem Fahrer gleichzeitig als akustischer Hinweis dahingehend, dass die Bremskraft des Anhängers reduziert wird und kein Bremswiderstand des Anhängers mehr zu erwarten ist, sondern sich das Heck des Anhängers bereits in einem solchen Abstand zur Rampe oder Laderampe oder dergleichen befindet, der einem vorbestimmten Abstand entspricht. Dieser vorbestimmte Abstand kann beispielsweise durch eine Systemkonfiguration eines Steuergeräts des Systems zur Unterstützung des Fahrers bei der Rückwärtsfahrt individuell eingestellt werden.

Es ist nach einer Weiterbildung der Erfindung auch vorgesehen, dass bei der Rückwärtsfahrt eine am Anhänger vorgesehene Beleuchtungseinrichtung aktivierbar ist, welche der Breitenerstreckung des Anhängers entsprechende Leuchtstreifen hinterhalb des Anhängers auf die Fahrbahnoberfläche projiziert.

Beim rückwärtigen Rangieren eines Anhängers kann insbesondere bei einer Kurvenfahrt eine visuelle Erweiterung oder Verlängerung der Längskontur des Anhängers von Vorteil sein. Das erfindungsgemäße Verfahren sieht vor, eine der Fahrspur des Anhängers entsprechende Bodenbeleuchtung hinter dem Heck des Anhängers auf die Fahrbahnoberfläche zu projizieren.

Die Bodenbeleuchtung kann als Linienmarkierung ausgebildet sein, welche durch auf den Boden projizierte farbige Linien oder Streifen, beispielsweise blaue Streifen ausgebildet sein kann.

Diese Bodenbeleuchtung kann mittels eines Aktivierungsmodus eines Steuergeräts des Systems aktiviert werden, wobei es sich bei diesem Aktivierungsmodus um einen von der Aktivierung der Rückfahrscheinwerfer des Anhängers unterscheidenden Aktivierungsmodus handelt. Damit ist erreicht, dass die Aktivierung der Linienmarkierung nur dann stattfindet, wenn dies beispielsweise vom Fahrer des Fahrzeugs aktiv angesteuert wird, wozu beispielsweise eine Aktivierungssequenz durch eine Bedienung eines Schalters am Armaturenbrett oder einer Schalteinrichtung des Fahrzeugs oder Zugfahrzeugs oder der Eingabe einer Aktivierungssequenz an einer Bedieneinrichtung des Fahrzeugs oder Zugfahrzeugs eingeleitet wird.

Es ist nach einer Weiterbildung der Erfindung auch vorgesehen, dass bei der Rückwärtsfahrt eine am Anhänger vorgesehene Beleuchtungseinrichtung aktivierbar ist, welche einen weitgehend der Längserstreckung des Anhängers entsprechenden Leuchtstreifen seitlich des Anhängers auf die Fahrbahnoberfläche projiziert.

Unter der Fahrbahnoberfläche ist im vorliegenden Fall sowohl eine Oberfläche zu verstehen, welche der Verfahrbewegung des Anhängers dient, als auch eine Fläche, welche beispielsweise eine Laderampe darstellt. Damit kann mit dem erfindungsgemäßen Verfahren eine Ladezonenmarkierung realisiert werden, welche den Fahrer des Fahrzeugs unterstützen kann, damit das Zugfahrzeug mit Anhänger korrekt geparkt werden kann, nämlich beispielsweise an einer Laderampe, um den Ladevorgang ohne störende Hindernisse, wie beispielsweise Bordsteinkanten oder dergleichen durchführen zu können.

Diese Funktion kann dem Fahrer des Fahrzeugs wieder durch eine Aktivierungsfunktion bereitgestellt werden, welche beispielsweise ein Steuergerät eines Systems so ansteuert, dass die Beleuchtungseinrichtung vom Fahrer aktiviert werden kann.

Es ist nach einer Weiterbildung der Erfindung auch vorgesehen, dass ein Abstand eines Endabschnitts des Hecks des Anhängers zu dem Sensor mittels einer Messeinrichtung erfasst wird und von dem vom Sensor ermittelten Abstand zum Hindernis zur Ermittlung eines resultierenden Abstandswertes abgezogen wird und der resultierende Abstandswert zu seiner Einordnung in die Abstandsklasse verwendet wird.

Das Heck eines Anhängers weist üblicherweise zu dem Montageort des Sensors am Heck des Anhängers einen vorbestimmten Offset auf. Der Offset ist hier ein Abstand in Längsrichtung des Anhängers, den der Sensor, insbesondere eine Vorderseitenfläche des Sensors, welche dem Endabschnitt zugeordnet ist, zum Endabschnitt aufweist. Der Sensor ist vom Endabschnitt des Anhängers in Vorwärtsfahrtrichtung des Anhängers aus betrachtet in einem Abstand angeordnet, sodass der Endabschnitt des Anhängers in Rückwärtsfahrtrichtung des Anhängers näher am Hindernis ist als der Sensor selbst.

Ein Anhänger kann einen veränderbaren Längenüberstand am Heck haben, beispielsweise durch eine über das Heck überstehende Ladung oder beispielsweise durch einen längenveränderbaren Endabschnitt, der beispielsweise durch einen teleskopierbaren Aufbau am Endabschnitt des Anhängers gebildet wird.

Ein Abstand, den ein solcher Endabschnitt des Anhängers zum Montageort des Sensors aufweist, wird nach einer Weiterbildung des erfindungsgemäßen Verfahrens von einer Messeinrichtung erfasst und von dem vom Sensor ermittelten Abstand zum Hindernis zur Ermittlung eines resultierenden Abstandswertes abgezogen, woraus der tatsächliche Abstandswert des Endabschnitts des Anhängers zum Hindernis resultiert.

Es ist nach einer Weiterbildung der Erfindung auch vorgesehen, dass die Feststellung des Abstands zum Hindernis vom Fahrer des Fahrzeugs deaktivierbar ist und zwar mittels eines vom Fahrer des Fahrzeugs herbeigeführten und vom Fahrzeug bereit gestellten Rückwärtsfahrsignals und ein vom Fahrer des Fahrzeugs herbeigeführtes und vom Fahrzeug bereitgestelltes Lichtsignal, und die Deaktivierung beim Vorliegen beider Signale innerhalb eines vorbestimmten Zeitintervalls stattfindet.

In gewissen Fahrsituationen, beispielsweise bei winterlichen Fahrbahnverhältnissen oder sehr beengten Rangierzonen oder auch dann, wenn der rückwärts zu bewegende Anhänger unter einen auf Stützen stehenden Container manövriert werden soll, kann es sinnvoll sein, wenn der Bremseingriff durch die Aktivierung der Betriebsbremse des Anhängers nicht stattfindet.

Vorstehend wurde erwähnt, dass die Feststellung des Abstands zum Hindernis vom Fahrer des Fahrzeugs deaktivierbar ist. In gleicher Weise kann nach einer alternativen Vorgehensweise die Feststellung des Abstands zum Hindernis nach wie vor aktiv sein, während aber die Aktivierung der Betriebsbremse des Anhängers zur Bereitstellung einer ersten Bremskraft vom Fahrer des Fahrzeugs deaktiviert werden kann.

Die Deaktivierung des erfindungsgemäßen Verfahrens zur Unterstützung des Fahrers eines Fahrzeugs mit Anhänger bei der Rückwärtsfahrt kann nach einer bekannten Vorgehensweise durch das Umlegen eines Schalters beispielsweise am Armaturenbrett des Fahrzeugs stattfinden.

Die erfindungsgemäße Vorgehensweise aber ist eine andere, und besteht in der Auswertung zweier Signale, nämlich des vorstehend beschriebenen Rückwärtsfahrsignals und des vorstehend beschriebenen Lichtsignals, wobei beide Signale vom Fahrzeug bereitgestellt werden. Das Rückwärtsfahrsignal liegt dann vor, wenn der Fahrer des Fahrzeugs den Rückwärtsgang zur Rückwärtsfahrt des Fahrzeugs eingelegt hat. Dieses Signal kann beispielsweise über einen am Fahrzeug vorhandenen Datenbus oder Kommunikationsbus abgegriffen werden.

Das vorstehend beschriebene Lichtsignal kann ebenfalls über einen am Fahrzeug vorhandenen Datenbus oder Kommunikationsbus abgegriffen werden, bei dem Lichtsignal kann es sich beispielsweise um ein Signal handeln, welches abgegriffen werden kann, wenn der Fahrer des Fahrzeugs ein Nebelschlusslicht am Anhänger aktiviert.

Die Signalfolge, nämlich zunächst Aktivierung des Rückwärtsfahrsignals und dann Aktivierung des Nebelschlusslichtsignals ist eine im Betriebsalltag von Fahrzeugen mit Anhänger üblicherweise nicht vorkommende Signalfolge und besitzt den Vorteil, dass beide Signale vom am Fahrzeug vorhandenen Datenbus oder Kommunikationsbus ausgelesen werden können, also von einem Steuergerät des Systems zur Unterstützung des Fahrers bei der Rückwärtsfahrt ausgewertet werden können. Damit entfällt die Notwendigkeit der Installation eines Schalters am Fahrzeug und auch die Notwendigkeit der Installation einer Zusatzverkabelung am Fahrzeug.

Es wird nach dem erfindungsgemäßen Verfahren eine Lichtfunktion "Fog" einer standardisierten Verkabelung ISO 12098 genutzt, um in einer bestimmten Kombination das den Fahrer unterstützende Rückfahrsystem bewusst zu deaktivieren. Dabei müssen beide Signale innerhalb einer vorbestimmten Zeitdauer gleichzeitig vorliegen, die Kombination der Signale bedeutet also beispielsweise die Aktivierung der Nebelschlussleuchte des Anhängers bei bereits aktiver Rückwärtsfahrtleuchte des Anhängers für eine bestimmte Minimalzeit von beispielsweise 0,2 Sekunden, wobei zusätzlich auf steigende Signalflanke geachtet werden kann. Eine solche Kombination ist im normalen Reversierbetrieb oder Rückwärtsfahrtbetrieb eines Fahrzeugs mit Anhänger nicht gegeben, wodurch eine Fehlbetätigung durch den Fahrer des Fahrzeugs ausgeschlossen werden kann.

Die genannte Deaktivierungsfunktion ist daher nicht fehleranfällig, eine zusätzliche Verdrahtung am Fahrzeug ist nicht notwendig und der Fahrer des Fahrzeugs kann die Deaktivierung durchführen, ohne dass er das Fahrerhaus des Fahrzeugs verlassen muss.

Die Erfindung schafft auch ein System zur Durchführung des vorstehend genannten Verfahrens, mit einem Sensor und einer Steuereinrichtung, wobei der Sensor zur Bereitstellung eines den Abstand des Sensors zu einem Hindernis darstellenden Sensorsignals eingerichtet ist und die Steuereinrichtung zur Ermittlung des Abstands des Sensors zum Hindernis auf Basis des Sensorsignals und zur Unterteilung des Abstands in Abstandsklassen und zur Beeinflussung eines elektronischen Bremssystems eines Fahrzeuganhängers eingerichtet ist und das System eine Beleuchtungseinrichtung aufweist, welche zur Abgabe eines optischen Signals eingerichtet ist, welches durch unterschiedliche Blinkfrequenzen den Abstand zum Hindernis repräsentiert, wobei das System zur Anordnung an einem Fahrzeuganhänger eingerichtet ist.

Das erfindungsgemäße System umfasst einen Sensor, der zur Bereitstellung eines den Abstand des Sensors zu einem Hindernis darstellenden Sensorsignals eingerichtet ist. Bei dem Sensor kann es sich beispielsweise um einen Radarsensor handeln, der über eine Laufzeitmessung eines Radarsignals den aktuellen Abstand des Sensors von einem Hindernis messen kann. Die Steuereinrichtung kann beispielsweise ein Steuergerät sein, welches am Anhänger angeordnet sein kann und mit einer Verkabelung des Anhängers funktional gekoppelt ist und auf einem Datenbus oder Kommunikationsbus des Anhängers übertragene Daten oder Lichtsignale auslesen und verarbeiten sowie auswerten kann. Darüber hinaus ist die Steuereinrichtung auch zur Einteilung oder Unterteilung des jeweils gemessenen Abstands in Abstandsklassen eingerichtet. Das Steuergerät beziehungsweise die Steuereinrichtung ist auch dazu eingerichtet, ein elektronisches Bremssystem (EBS) des Anhängers anzusteuern, sodass das Bremssystem eine vorbestimmte Bremskraft des Anhängers aufbauen kann. Darüber hinaus weist das erfindungsgemäße System auch eine Beleuchtungseinrichtung auf, welche zur Abgabe eines optischen Signals eingerichtet ist, welches zur Anzeige und Visualisierung durch unterschiedliche Blinkfrequenzen den aktuell gemessenen Abstand des an einem Anhänger angeordneten Sensors zum Hindernis eingerichtet ist. Die Erfindung sieht vor, dass das genannte System zur Anordnung an einem Fahrzeuganhänger eingerichtet ist.

Damit kann das System bei der Fertigung des Anhängers am Anhänger montiert werden oder auch als Add-on Lösung nachträglich am Anhänger angeordnet werden.

Es ist nach einer Weiterbildung der Erfindung auch vorgesehen, dass das System zur Erkennung eines beweglichen Objekts eingerichtet ist, welches eine vorbestimmte vertikale Höhe aufweist und/oder eine Relativgeschwindigkeit von mindestens 1.5 Meter pro Sekunde aufweist. Durch die Auswertung der vorbestimmten vertikalen Höhe des beweglichen Objekts und/oder dessen Relativgeschwindigkeit ist das erfindungsgemäße System dazu in der Lage, Fehlerkennungen von sich in einem Detektionsbereich hinterhalb des Hecks des Anhängers bewegenden Objekten zu vermeiden.

Darüber hinaus ist es nach einer Weiterbildung der Erfindung auch vorgesehen, dass das erfindungsgemäße System zur optischen Visualisierung eines deaktivierten Zustands des erfindungsgemäßen Verfahrens eingerichtet ist, womit auch umfasst ist, dass das erfindungsgemäße System zur optischen Visualisierung des deaktivierten Zustands der Feststellung des Abstands des Sensors des Systems zu einem Hindernis eingerichtet ist und hierzu die Beleuchtungseinrichtung mit einer sich von der Blinkfrequenz bei der Rückwärtsfahrt eines Anhängers unterscheidenden Blinksequenz oder Blinkfrequenz eingerichtet ist.

Es ist nach einer Weiterbildung der Erfindung auch vorgesehen, dass das System mit einer autarken elektrischen Energiequelle versehen ist, wie beispielsweise einer wiederaufladbaren Batterie und das System auch dazu eingerichtet ist, ein optisches Signal auszugeben, welches durch unterschiedliche Blinkfrequenzen den verbleibenden Abstand eines vom Fahrzeug getrennten und mittels eines Manipulators bewegten Anhängers zu einem Hindernis darzustellen. Damit kann vorteilhafterweise auch ein von einem Fahrzeug oder Zugfahrzeug getrennter Anhänger, der mittels eines Manipulators beispielsweise auf einem Speditionshof bewegt wird, den jeweils gemessenen Abstand des Sensors und damit des Fahrzeughecks des Anhängers zu einem Hindernis anzeigen, da die autarke Energiequelle das Steuergerät und den Sensor und die Beleuchtungseinrichtung mit elektrischer Energie hierzu versorgen kann.

Es ist nach einer Weiterbildung des erfindungsgemäßen Systems auch vorgesehen, dass das System eine Beleuchtungseinrichtung aufweist, welche zur Projektion von der Breitenerstreckung eines Anhängers entsprechender Leuchtstreifen auf die Fahrbahnoberfläche eingerichtet ist. Hierdurch kann das System in vorteilhafter Weise Leuchtstreifen auf die Fahrbahnoberfläche projizieren, welche bei der Rückwärtsfahrt eines Anhängers, beispielsweise bei der Kurvenfahrt, für den Fahrer des Fahrzeugs oder auch des vorstehend genannten Manipulators von großer Hilfe sind.

Schließlich ist es nach einer Weiterbildung des erfindungsgemäßen Systems auch vorgesehen, dass es eine Beleuchtungseinrichtung aufweist, welche zur Projektion eines weitgehend der Längserstreckung eines Anhängers entsprechenden Leuchtstreifens auf die Fahrbahnoberfläche eingerichtet ist. Bei der Fahrbahnoberfläche kann es sich natürlich auch um eine Laderampe handeln, welche durch die Beleuchtungseinrichtung mit einem Leuchtstreifen oder einer Leuchtfläche versehen wird, die dem Fahrer des Fahrzeugs eine exakte Anfahrt an die Laderampe erleichtern.

Die Erfindung wird im Folgenden anhand der Zeichnung näher erläutert. Diese zeigt in:
Fig. 1 eine schematische Darstellung eines Fahrzeugs mit einem Anhänger und eine vergrößerte Darstellung eines Ausschnitts des Anhängers mit einer schematischen Darstellung von Bestandteilen des Systems;
Fig. 2 eine grafische Darstellung zur Erläuterung des in Abstandsklassen unterteilten aktuell gemessenen Abstands zum Hindernis mit einer Darstellung zur Erläuterung der Beeinflussung des elektronischen Bremssystems des Anhängers;
Fig. 3 eine schematische Darstellung eines Detektionsbereichs hinter dem Heck des Anhängers mit einer grafischen Erläuterung der Betriebsweise von am Anhänger angeordneten Beleuchtungseinrichtungen;
Fig. 4 eine Darstellung ähnlich derjenigen nach Fig. 3;
Fig. 5 eine Darstellung ähnlich derjenigen nach Fig. 4;
Fig. 6 eine Darstellung ähnlich derjenigen nach Fig. 5 mit einer ersten Bremskraft des Anhängers;
Fig. 7 eine Darstellung ähnlich derjenigen nach Fig. 6 mit einer zweiten Bremskraft des Anhängers;
Fig. 8 eine Darstellung ähnlich derjenigen nach Fig. 7 mit einer Situation der Querverkehrserkennung;
Fig. 9 eine schematische Darstellung eines Hecks eines Anhängers zur Erläuterung der Funktion der Projektion von Leuchtstreifen auf der Fahrbahnoberfläche;
Fig. 10 eine Darstellung eines Fahrzeugs mit einem Anhänger, der an einer Laderampe seitlich angeordnet ist;
Fig. 11 eine schematische Darstellung eines Teils eines Hecks eines Anhängers zur Erläuterung eines statischen Offsets;
Fig. 12 eine Darstellung ähnlich derjenigen nach Fig. 11 zur Erläuterung eines dynamischen Offsets;
Fig. 13 eine Darstellung ähnlich derjenigen nach Fig. 12 zur Erläuterung eines variablen dynamischen Offsets; und
Fig. 14 eine grafische Erläuterung des Lösens der Betriebsbremse des Anhängers beim Andockvorgang.

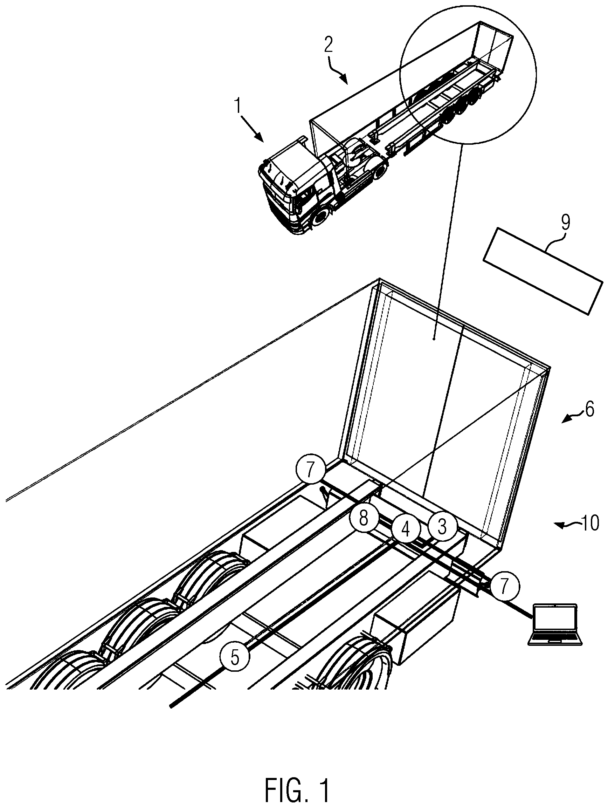

Fig. 1 der Zeichnung zeigt eine schematische Darstellung eines Fahrzeugs 1 mit einem Anhänger 2 und eine vergrößerte Darstellung eines Ausschnitts des Anhängers mit einer schematischen Darstellung von Bestandteilen des Systems 10 zur Durchführung des nachfolgend noch näher erläuterten Verfahrens zur Unterstützung eines Fahrers des Fahrzeugs 1 mit Anhänger 2 bei der Rückwärtsfahrt und ein schematisch dargestelltes Hindernis 9, bei dem es sich beispielsweise um eine Rampe oder Laderampe handelt, an welcher das Fahrzeug 1 mit dem Anhänger 2 zur Entladung oder Beladung mittels Rückwärtsfahrt andocken soll.

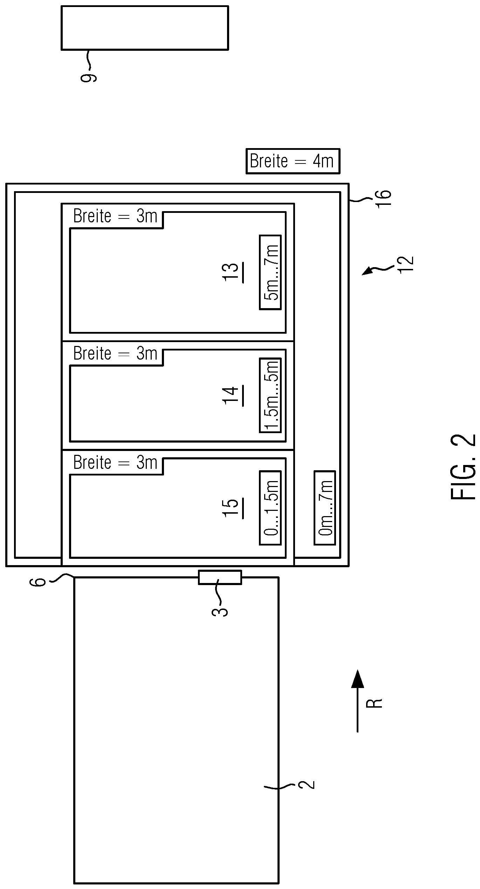

Das System 10 weist einen beispielsweise auch anhand von Fig. 2 der Zeichnung ersichtlichen Sensor 3 auf, bei dem es sich um einen Radarsensor handeln kann und besitzt eine Steuereinrichtung oder ein Steuergerät 4, welches zur Ermittlung des Abstands des Sensors 4 von dem Hindernis 9 auf Basis des Signals des Sensors 4 eingerichtet ist.

Darüber hinaus kann das Steuergerät 4 den aktuell gemessenen Abstand in Abstandsklassen unterteilen, in denen abhängig davon, wie groß der aktuell gemessene Abstand vom Hindernis 9 ist und das Steuergerät 4 ist darüber hinaus dazu eingerichtet, ein elektronisches Bremssystem 5 des Fahrzeugs 1, bei dem es sich bei der dargestellten Ausführungsform um einen Sattelschlepper mit Sattelauflieger als Anhänger 2 handelt, zur Bereitstellung von Bremskraft durch den Anhänger 2 ansteuern und damit beeinflussen kann.

Darüber hinaus ist im Bereich des Hecks 6 des Anhängers 2 beidseits eine jeweilige Beleuchtungseinrichtung 7 vorgesehen, welche vom Steuergerät 4 so angesteuert werden kann, dass die Beleuchtungseinrichtung ein oder ausgeschaltet werden kann oder auch so angesteuert werden kann, dass für unterschiedliche Zeiträume Licht abgestrahlt wird, die Beleuchtungseinrichtung also beispielsweise mit unterschiedlichen Blinkfrequenzen blinken kann und auch unterschiedliche Lichtsequenzen oder Blinkfrequenzen oder Signale für unterschiedliche Zeitdauern abstrahlen kann, welche jeweils optische Warnsignale oder Hinweissignale für den Fahrer des Fahrzeugs 1 und auch für Personen in der Umgebung des Fahrzeugs 1 darstellen.

Das System 10 umfasst auch einen akustischen Warnsignalgeber oder Beeper 8, welcher ebenfalls vom Steuergerät 4 so angesteuert werden kann, dass der Warnsignalgeber 8 akustische Warnsignale unterschiedlicher Zeitdauer emittieren kann, welche ebenfalls für den Fahrer des Fahrzeugs 1 als auch für Personen in der Umgebung des Fahrzeugs 1 als Hinweissignale oder Warnsignale bestimmt sind.

Wenn ein bewegliches Objekt in dem Detektionsbereich 16 erfasst wird, wird der akustische Signalgeber 8 vom Steuergerät zur Abgabe einer spezifischen Abfolge von akustischen Signalen angesteuert, die sowohl den Fahrer des Fahrzeugs als auch das bewegliche Objekt auf das bestehende Gefahrenpotenzial hinweisen. Die Tonfolge besteht beispielsweise darin, dass für 20 Millisekunden ein akustisches Signal abgegeben wird, gefolgt von 20 Millisekunden Signaltonpause und sich dies alle 150 Millisekunden wiederholt. Damit entsteht ein spezifischer Warnton, welcher als Triller wahrgenommen wird.

Die Darstellung in Fig. 1 der Zeichnung umfasst auch einen schematisch dargestellten Computer 11, mit dem ein im Steuergerät 4 enthaltenes Computerprogrammprodukt eingestellt oder konfiguriert werden kann. Mit dem Computerprogrammprodukt kann das Steuergerät beispielsweise das elektronische Bremssystem 5 des Fahrzeugs 1 zum Aufbau unterschiedlicher Bremsdrücke und damit Bremskräfte ansteuern und auch den Warnsignalgeber 8 sowie die Beleuchtungseinrichtungen 7 ansteuern, bei denen es sich beispielsweise um hintere Begrenzungsleuchten handeln kann, welche an dem Heck 6 des Anhängers 2 angeordnet sind.

Wie es anhand der Fig. 1 ersichtlich ist, ist das System 10 mit den genannten Bestandteilen oder Bauteilen an einem Fahrzeuganhänger 2 angeordnet und dient der Messung des Abstands des Hecks 6 des Fahrzeugs, welches auch anhand der schematischen Darstellung der Fig. 2 ersichtlich ist, zu einem Hindernis 9, welches auch ganz allgemein als Objekt bezeichnet werden kann.

Fig. 2 zeigt eine grafische Darstellung zur Erläuterung des in Abstandsklassen 12 unterteilten aktuell gemessenen Abstands zum Hindernis 9 mit einer Darstellung zur Erläuterung der Beeinflussung des elektronischen Bremssystems 5 des Anhängers oder Fahrzeuganhängers 2.

Fig. 2 zeigt in einer schematischen Darstellung den Anhänger 2, an dessen Heck 6 der Sensor 3 angeordnet ist. Bei der Rückwärtsfahrt des Fahrzeugs 1 mit dem Anhänger 2 bewegt sich der Anhänger 2 in Richtung des Pfeils R nach Fig. 2 und zwar in Richtung auf das Hindernis 9 zu, bei dem es sich um eine Rampe oder Laderampe handeln kann.

Bei der in Fig. 2 dargestellten Ausführungsform des erfindungsgemäßen Verfahrens befindet sich der vom Radarsensor 3 aktuell gemessene Abstand zum Hindernis 9 in einer Abstandsklasse 13, die von einem aktuell gemessenen Abstand zum Hindernis 9 von fünf Meter bis sieben Meter reicht, in dem noch kein Bremseingriff stattfindet.

Das bedeutet dies mit anderen Worten, dass der vom Radarsensor 3 zum Hindernis oder Objekt 9 gemessene und von der Steuereinrichtung 4 ausgewertete Abstand in die Abstandsklasse fünf Meter bis sieben Meter fällt und somit ein Bremseingriff noch nicht benötigt ist.

Dass der aktuell gemessene Abstand zum Hindernis in die Abstandsklasse 5 bis 7 Meter fällt, kann aber dem Fahrer des Fahrzeugs bereits durch ein optisches Signal durch die Beleuchtungseinrichtungen 7 angezeigt werden und zwar beispielsweise dadurch, dass die Beleuchtungseinrichtungen 7 vom Steuergerät zum konstanten Blinken mit einer Blinkfrequenz von 1 Hertz angesteuert werden.

Wenn sich das Fahrzeug 2 weiter in Richtung des Pfeils R in Richtung des Objekts 9 bewegt, wird der vom Sensor 3 aktuell gemessene Abstand des Hecks des Anhängers 2 zum Objekt 9 allmählich kleiner, bis der aktuell gemessene Abstand so klein geworden ist, dass er in die erste Abstandsklasse 14 mit erstem Bremseneingriff fällt.

Wenn der aktuell gemessene Abstand also in die Abstandsklasse 1.5 bis 5 Meter fällt, dann wird vom Steuergerät 4 das elektronische Bremssystem EBS 5 des Anhängers so angesteuert, dass beispielsweise eine Bremskraft vom Anhänger 2 erzeugt wird, welche in der Druckluftbremsanlage des Anhängers 2 entsteht, wenn die Druckluft in der Druckluftbremsanlage auf einen Betriebsdruck von 0.8 bar angehoben wird.

Der Fahrer des Fahrzeugs 1 erfährt durch den Aufbau dieser ersten Bremskraft durch den Anhänger 2 eine haptische Rückmeldung dadurch, dass der Aufbau der ersten Bremskraft zu einem in Fahrzeuglängsrichtung des Fahrzeugs 1 und des Anhängers 2 wirkenden kurzzeitigen negativen Beschleunigungsimpuls führt, was der Fahrer des Fahrzeugs durch eine nicht störende geringfügige Bewegung seines Kopfbereichs und/oder Nackenbereichs wahrnimmt.

In der Praxis läuft dies so ab, dass der Fahrer das Fahrzeug 1 mit Anhänger 2 in Richtung der Rampe 9 rückwärts fährt und er zunächst ein Aufleuchten der hinteren Begrenzungsleuchten 7 wahrnimmt, was ihm signalisiert, dass bei der weiteren Rückwärtsfahrt in Richtung der Rampe 9 demnächst ein geringfügiger Bremsimpuls beziehungsweise negativer Beschleunigungsimpuls zu erwarten ist.

Der Bremsimpuls beziehungsweise negative Beschleunigungsimpuls folgt dann, wenn der aktuell gemessene Abstand des Hecks 6 zur Rampe 9 in die erste Abstandsklasse 14 eintritt, also fünf Meter beträgt. Dieser Abstand wird dem Fahrer durch den vorstehend genannten haptischen Hinweis signalisiert, der Fahrer muss sich dazu nicht besonders konzentrieren, da er diesen haptischen Hinweis sofort spürt, sobald die erste Bremskraft durch den Anhänger 2 aufgebaut wird.

Bei der Fortführung der Rückwärtsfahrt des Anhängers 2 in Richtung zur Rampe 9 wird der aktuell gemessene Abstand des Hecks 6 zur Rampe 9 sukzessive kleiner, bis der aktuell gemessene Abstand in die zweite Abstandsklasse 0 bis 1.5 Meter fällt. Unmittelbar dann, wenn der aktuell gemessene Abstand 1.5 Meter beträgt, wird der Bremsdruck in der Druckluftbremsanlage des Anhängers 2 vom Steuergerät 4 auf einen höheren Wert von beispielsweise 3.5 bar erhöht, was dazu führt, dass das elektronische Bremssystem 5 des Anhängers 2 eine im Vergleich zur ersten Bremskraft höhere, zweite Bremskraft erzeugt.

Die Erhöhung der Bremskraft durch das Steuergerät 4 führt wieder zu einem negativen Beschleunigungsimpuls in Fahrzeuglängsrichtung, was der Fahrer wieder dadurch spürt, dass sein Kopfbereich oder Nackenbereich einen nicht störenden negativen Beschleunigungsimpuls erfährt, der Fahrer weiß dann, dass sich das Heck 6 des Fahrzeugs 2 innerhalb der zweiten Abstandsklasse 15 befindet.

Die zweite höhere Bremskraft kann so eingestellt werden, dass das Fahrzeug in Abhängigkeit des vom Antriebsmotor des Fahrzeugs aktuell aufgebrachten Antriebsmoments zum Stillstand kommt oder auch so, dass das Fahrzeug 1 mit dem Anhänger 2 weiter in Richtung zur Rampe 9 fährt, aber aufgrund der zweiten höheren Bremskraft mit niedrigerer Geschwindigkeit. Im letztgenannten Fall führt die Rückwärtsfahrt des Anhängers 2 in Richtung der Rampe 9 dazu, dass der aktuell gemessene Abstand vom Heck 6 zur Rampe 9 weiter geringer wird und dann kann das Steuergerät 4 in Abhängigkeit eines vorbestimmten Mindestabstands des Hecks 6 Rampe 9 den Bremsdruck in der Druckluftbremsanlage des Anhängers 2 weiter erhöhen, bis das Fahrzeug 1 mit dem Anhänger 2 zum Stillstand kommt.

Es ist auch möglich, dass die zweite, höhere Bremskraft den Anhänger 2 bereits zum Stillstand bringt, wenn sich der aktuell gemessene Abstand des Hecks des Fahrzeugs 2 zur Rampe 9 in der zweiten Abstandsklasse gemäß der zweiten Abstandsklasse 15 befindet. Damit weiß der Fahrer durch den haptischen Hinweis, dass sich das Heck 6 des Fahrzeugs 2 in der genannten zweiten Abstandsklasse befindet.

Der der zweiten höheren Bremskraft entsprechende Betriebsdruck in dem elektronischen Bremssystem 5 des Anhängers 2 befindet sich noch in der vom Steuergerät 4 eingestellten Höhe, das Fahrzeug 1 ist zum Stillstand gekommen, der Fahrer weiß, dass er dafür sorgen kann, dass das Antriebsmoment des Antriebsmotors des Fahrzeugs 1 verringert werden kann, indem der Fahrer beispielsweise die Betätigung eines Fahrpedals oder Gaspedals des Fahrzeugs 1 aufhebt.

Der der zweiten höheren Bremskraft entsprechende Betriebsdruck in dem elektronischen Bremssystem 5 des Anhängers 2 wird in diesem Zustand noch für eine vorbestimmte Zeit von beispielsweise vier Sekunden aufrechterhalten und dann abgesenkt. Das Absenken des Betriebsdrucks in dem elektronischen Bremssystem 5 des Anhängers nimmt der Fahrer wieder akustisch wahr, woraufhin der Fahrer dann den letzten vorbestimmten Abstand des Hecks 6 des Anhängers 2 zur Rampe 9 kontrolliert ohne Bremseneingriff zurücklegen kann.

Fig. 2 der Zeichnung zeigt auch, dass ein Bereich 16 in Rückwärtsfahrtrichtung R hinter dem Heck 6 des Anhängers 2 sowohl in Längsrichtung als auch in Breitenrichtung größer ist als die jeweiligen Bereiche entsprechend der ersten Abstandsklasse 14 sowie der zweiten Abstandsklasse 15.

Der Bereich 16 ist der Detektionsbereich, innerhalb dessen eine Überwachung des Bereichs auf bewegliche Objekte stattfindet, da solche Objekte bei der Rückwärtsfahrt des Anhängers 2 einem Gefährdungspotenzial auf Kollision unterliegen.

Bei der dargestellten Ausführungsform nach Fig. 2 weist der Detektionsbereich eine Längserstreckung von sieben Meter und eine Breitenerstreckung von vier Meter auf und weist somit sowohl in Längsrichtung als auch in Breitenrichtung Abmessungen auf, welche größer sind als der Bereich innerhalb dessen der Abstand zwischen dem Heck 6 des Anhängers 2 und dem Objekt 9 gemessen wird.

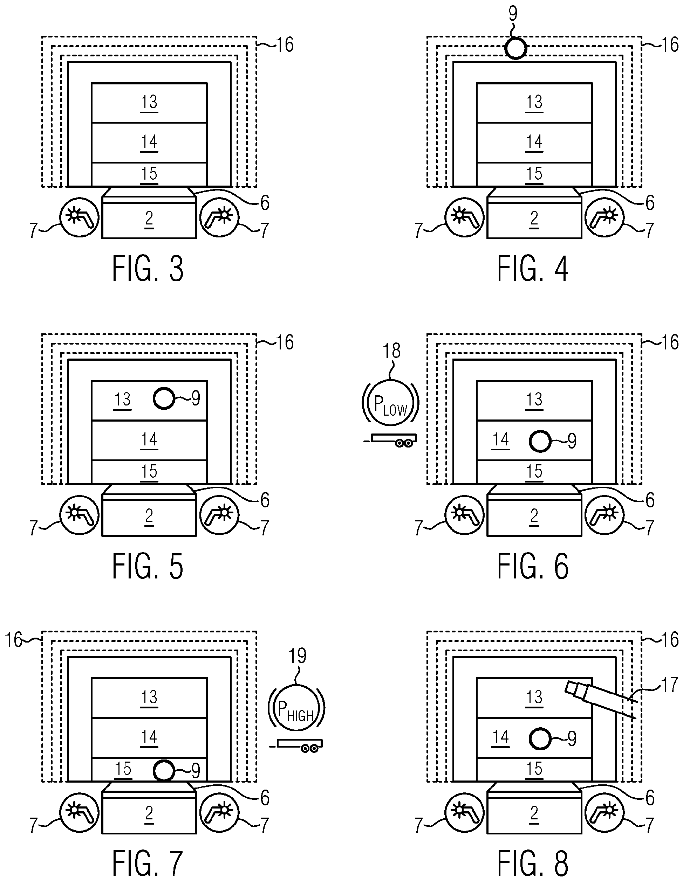

Fig. 8 der Zeichnung zeigt den Fall, dass sich bei der Rückwärtsfahrt des Anhängers 2 plötzlich ein bewegliches Objekt mit einer Geschwindigkeit größer 1.5 Meter pro Sekunde in den Detektionsbereich 16 begibt, woraufhin nach dem erfindungsgemäßen Verfahren das Steuergerät 4 die Betriebsbremse des Anhängers 2 mit einem eine Notbremsung einleitenden Betriebsdruck beaufschlagt, welcher beispielsweise fünf bar beträgt und dieser Betriebsdruck zu einer Notbremsung des Fahrzeugs 1 und des Anhängers 2 führt.

Gleichzeitig löst die Erkennung des beweglichen Objekts im Detektionsbereich 16 bei der Rückwärtsfahrt des Anhängers 2 ein akustisches Warnsignal aus und die beiden Beleuchtungseinrichtungen 7 werden in einen Zustand Dauerleuchten versetzt, was sowohl das bewegliche Objekt 17 über die Gefährdungssituation informiert und auch den Fahrer des Fahrzeugs 1 über die Gefährdungssituation informiert.

Fig. 3 der Zeichnung zeigt in einer schematischen Darstellung wieder den Detektionsbereich 16 hinter dem Heck 6 des Anhängers 2 mit einer grafischen Erläuterung der Betriebsweise von am Anhänger 2 angeordneten Beleuchtungseinrichtungen 7.

Fig. 3 der Zeichnung entspricht dabei der Situation, dass sich kein Objekt innerhalb des Detektionsbereichs 16 und der drei Zonen 13, 14 und 15 bei der Rückwärtsfahrt des Anhängers 2 befindet.

Das Steuergerät steuert die Beleuchtungseinrichtungen 7 zur Betriebsart Dauerleuchten an, der Abstand zu einem nachfolgend in Verbindung mit der Fig. 4 erläuterten Hindernis 9 wird zwar gemessen, das Heck 6 des Anhängers 2 befindet sich aber noch so weit vom Hindernis 9 entfernt, dass das Hindernis 9 nicht im Detektionsbereich 16 oder einer der drei Zonen 13, 14, 15 auftaucht.

Fig. 4 der Zeichnung zeigt eine Darstellung ähnlich derjenigen nach Fig. 3, wobei sich in diesem Fall der Anhänger 2 in Rückwärtsfahrtrichtung R bereits so weit in Richtung des Hindernisses 9 bewegt hat, dass das Hindernis 9 in den Detektionsbereich 16 gelangt ist.

Bei dieser Ausführungsform des erfindungsgemäßen Verfahrens wird dem Fahrer des Fahrzeugs 1 die Anwesenheit des Objekts 9 im Detektionsbereich durch ein Blinken der Beleuchtungseinrichtungen 7 mit der Frequenz 1 Hertz angezeigt.

Das Fahrzeug 1 bewegt sich in weiterer Folge zusammen mit dem Anhänger 2 weiter in Richtung des Hindernisses 9, der Abstand des Hecks 6 zum Hindernis 9 wird daher geringer und das Hindernis 9 tritt in die Zone 13 ein, welche der Abstandsklasse ohne Bremseneingriff entspricht. Der kleiner werdende Abstand zwischen dem Heck 6 und dem Objekt 9, welches sich bereits in der Zone 13 befindet, wird den Fahrer des Fahrzeugs 1 durch eine Veränderung des Blinkverhaltens der Beleuchtungseinrichtungen beziehungsweise hinteren Begrenzungsleuchten 7 angezeigt. Das Steuergerät 4 steuert in diesem Fall die hinteren Begrenzungsleuchten 7 so an, dass diese mit einer Blinkfrequenz von zwei Hertz leuchten. Der Fahrer des Fahrzeugs weiß daher, dass der Abstand zwischen dem Heck 6 und dem Hindernis 9 kleiner geworden ist, gleichzeitig hat der Fahrer noch keinen Bremseneingriff durch das Steuergerät 4 auf die Betriebsbremse des Anhängers 2 festgestellt, was in diesem Fall bedeutet, dass der Fahrer des Fahrzeugs 1 noch keinen den Bremseneingriff signalisierenden haptischen Hinweis erfahren hat.

In weiterer Folge bewegt sich das Fahrzeug 1 zusammen mit dem Anhänger 2 weiter in Rückwärtsfahrtrichtung R auf das Hindernis 9 zu. Diese Situation ist in Fig. 6 der Zeichnung schematisch dargestellt.

Sobald sich der Anhänger 2 so weit in Richtung zu dem Hindernis 9 bewegt hat, dass das Hindernis 9 einen solchen Abstand zum Heck 6 des Fahrzeugs aufweist, dass der Abstand in die erste Abstandsklasse fehlt, welche der Zone 14 zugeordnet ist, steuert das Steuergerät 4 die Betriebsbremse des Anhängers 2 mit einem solchen Betriebsdruck an, dass die Betriebsbremse eine erste Bremskraft ausübt. Dies ist in Fig. 6 mit dem Symbol mit dem Bezugszeichen 18 dargestellt. Gleichzeitig verändert sich die Blinkfrequenz der Seitenbegrenzungsleuchten 7 von zwei Hertz auf vier Hertz, der Fahrer des Fahrzeugs erfährt also sowohl einen haptischen Hinweis darüber, dass sich das Objekt 9 nun im Bereich der ersten Abstandsklasse 13 angeordnet befindet als auch einen optischen Hinweis darüber, dass der Abstand zwischen dem Heck 6 des Anhängers 2 und dem Objekt 9 kleiner geworden ist, sich das Objekt 9 also in einem Abstand von 1.5 bis fünf Meter zum Heck 6 des Anhängers 2 angeordnet befindet.

In weiterer Folge bewegt sich das Fahrzeug 1 mit dem Anhänger 2 weiter in Richtung der Rückwärtsfahrtrichtung R, der lichte oder gemessene Abstand zwischen den Objekt 9 und dem Heck 6 des Anhängers 2 wird kleiner und der Abstand tritt in die zweite Abstandsklasse 15 ein, das Objekt 9 befindet sich also in einem Bereich von 0 bis 1.5 Meter zum Heck 6 des Anhängers 2 entfernt angeordnet.

Diese Situation ist in Fig. 7 der Zeichnung schematisch dargestellt. Sobald der aktuell gemessene Abstand zwischen den Hindernis 9 und dem Heck 6 des Anhängers 2 so klein geworden ist, dass der Abstand von der Steuereinrichtung 4 in die zweite Abstandsklasse klassifiziert wird, steuert die Steuereinrichtung 4 die Betriebsbremse des Anhängers 2 mit einem höheren Betriebsdruck an, der beispielsweise 3.5 bar entspricht, die Betriebsbremse des Anhängers reagiert damit, dass die Bremskraft von dem der ersten Bremskraft entsprechenden Wert zu dem der zweiten Bremskraft entsprechenden Wert ansteigt, was durch das Symbol 19 in Fig. 7 der Zeichnung schematisch dargestellt ist und gleichzeitig steuert das Steuergerät 4 die hinteren Begrenzungsleuchten 7 zum Betriebsmodus Dauerleuchten an.

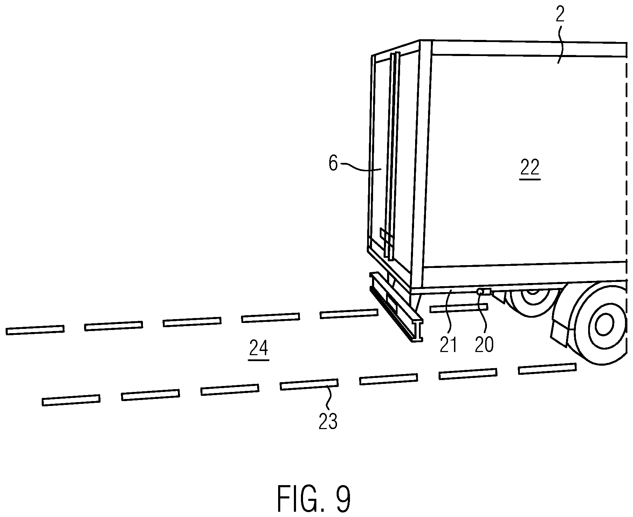

Fig. 9 der Zeichnung zeigt eine schematische Darstellung eines Hecks eines Anhängers zur Erläuterung der Funktion der Projektion von Leuchtstreifen auf der Fahrbahnoberfläche.

Im Bereich des Hecks 6 des Anhängers 2 ist im Bereich des Unterbodens 21 des Aufbaus 22 des Anhängers 2 beidseits der Längsrichtung des Anhängers 2 eine jeweilige Beleuchtungseinrichtung 20 angeordnet, welche von der Steuereinrichtung beziehungsweise dem Steuergerät 4 so angesteuert beziehungsweise aktiviert werden kann, dass die Beleuchtungseinrichtungen 20 der Breitenerstreckung des Anhängers 2 entsprechende Leuchtstreifen 23 auf die Fahrbahnoberfläche 24 projizieren können. Diese Funktion kann der Fahrer des Fahrzeugs 1 mit dem Anhänger 2 beispielsweise dadurch aktivieren, dass er eine bestimmte Aktivierungssequenz durch seine Bedienung des Fahrzeugs 1 auslöst.

Im einfachsten Fall kann es sich bei dieser Aktivierungssequenz um einen Schalter am Armaturenbrett des Fahrzeugs 1 handeln. Es sind nach der Erfindung aber auch andere Aktivierungssequenzen möglich.

Diese Funktion der Spurmarkierung ist für den Fahrer des Fahrzeugs insbesondere bei der Kurvenfahrt beim Rückwärtsfahren von großer Hilfe. Die Spurmarkierung kann implementiert werden, indem die vorstehend erwähnten Beleuchtungseinrichtungen beispielsweise eine jeweilige Lichtspur in der Farbe Blau auf die Fahrbahnoberfläche projizieren. Diese Farbe indiziert wiederum für den Fahrer des Fahrzeugs, dass es sich um Spurmarkierungslichtstreifen handelt. Das Einschalten der Projektion der Spurmarkierungslichtstreifen auf die Fahrbahnoberfläche ist nicht mit der Rückfahrlichtfunktion des Fahrzeugs verbunden dergestalt, dass die Spurmarkierungslichtstreifen automatisch bei jeder Rückwärtsfahrt erscheinen.

Eine von der Erfindung vorgesehene weitere Aktivierungsfunktion der Projektion der Spurmarkierungslichtstreifen auf die Fahrbahnoberfläche besteht darin, dass diese erst dann aktiviert werden, wenn der Fahrer des Fahrzeugs das System zur Unterstützung bei der Rückwärtsfahrt aktiv deaktiviert hat. Diese Deaktivierung des Systems kann beispielsweise dadurch stattfinden, wie dies vorstehend bereits erläutert wurde, dass der Fahrer des Fahrzeugs zunächst den Rückwärtsfahrmodus des Fahrzeugs aktiviert, indem er beispielsweise das Getriebe des Fahrzeugs in die Rückwärtsfahrstellung schaltet und dann innerhalb einer vorbestimmten Zeitdauer die Nebelschlussleuchte aktiviert. Eine solche Aktivierungssequenz ist im üblichen Reversierbetrieb eines Lastkraftwagens mit Anhänger nicht gegeben, was eine Fehlbetätigung ausschließen kann.

Zur Aktivierung der Projektion der Spurmarkierungslichtstreifen auf die Fahrbahnoberfläche kann das Steuergerät zusätzliche Funktionsausgänge aufweisen, welche unter anderem die Spurmarkierungslichtstreifen aktiviert, indem das Steuergerät die vorstehend genannten Beleuchtungseinrichtungen am Unterboden des Anhängers aktiviert. Die Kombination aus deaktivierter Bremsdruckanforderung und auf den Boden projizierter Spurmarkierungslichtstreifen stellt eine große Unterstützung für den Fahrer dar, beispielsweise bei der Kurvenfahrt während der Rückwärtsfahrt in eine durch seitliche Bebauung begrenzte und damit enge Straße. Die Deaktivierung der Bremsdruckanforderung wird dem Fahrer des Fahrzeugs auch visuell angezeigt. Hierzu werden die hinteren Begrenzungsleuchten 7 mit einer spezifischen Blinkfrequenz angesteuert, welche als Doppelblitz wahrgenommen werden kann, nämlich einer Aktivierung der Lichtabgabe für 80 Millisekunden, gefolgt von einer Pause von 80 Millisekunden, gefolgt von einer weiteren Aktivierung der Lichtabgabe für 80 Millisekunden. Diese Blinksequenz wird beispielsweise alle 600 Millisekunden wiederholt, wodurch eine prägnante optische Visualisierung der Deaktivierung der Bremsdruckanforderung für den Fahrer des Fahrzeugs realisiert wird.

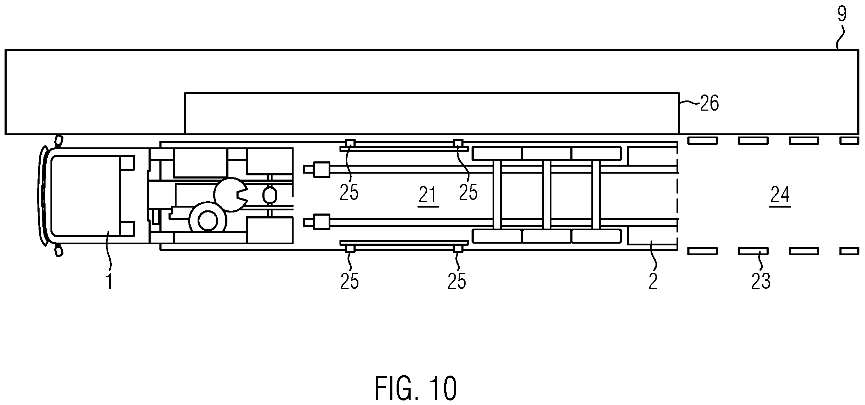

Fig. 10 der Zeichnung zeigt eine Darstellung eines Fahrzeugs 1 mit einem Anhänger 2, der an einer Laderampe 9 seitlich angeordnet ist.

Auch in der Fig. 10 sind die vorstehend erwähnten Spurmarkierungslichtstreifen 23 wieder dargestellt. Der Fahrer des Fahrzeugs 1 kann die Spurmarkierungslichtstreifen 23 nämlich sehr gut nutzen, wenn er das Fahrzeug 1 mit dem Anhänger 2 parallel zur lang gestreckten Laderampe 9 ausrichten muss. Dies geschieht üblicherweise mit einer Kurvenfahrt des Fahrzeugs 1 bei der Rückwärtsfahrt, wobei die auf die Fahrbahnoberfläche 24 projizierten Spurmarkierungslichtstreifen 23 dem Fahrer des Fahrzeugs 1 einen Hinweis dafür geben, in welchem Abstand die Spurmarkierungslichtstreifen 23 zur Laderampe 9 verlaufen.

Zu diesem Zweck kann das System mindestens eine weitere Beleuchtungseinrichtung 25 umfassen, welche zur Anordnung am Unterboden 21 des Anhängers 2 vorgesehen ist und durch das Steuergerät 1 aktiviert werden kann. Bei der Beleuchtungseinrichtung 25 kann es sich beispielsweise um eine rotes Licht abstrahlende Beleuchtungseinrichtung handeln, welche auf den Boden oder die Fahrbahnoberfläche oder die Laderampe 9 eine Ladezone 26 projiziert, was für den Fahrer des Fahrzeugs 1 wieder von großer Hilfe ist.

Diese Funktion der Projektion der Ladezone 26 kann vom Steuergerät 4 wieder mittels eines weiteren Funktionsausgangs angesteuert und aktiviert werden. Die Beleuchtungseinrichtungen 25 können an beiden Längsrichtungen des Unterbodens 21 des Fahrzeugs 1 angeordnet werden oder auch beispielsweise nur auf einer Seite, die dann dem länderspezifischen Fahrtrichtungsverkehr entspricht.

Diese zusätzliche Funktion der Projektion der Ladezone kann beispielsweise bei einem Zustand des Systems implementiert werden, in welchem die Bremsdruckanforderung bei der Rückwärtsfahrt an die Laderampe nicht mehr aktiviert ist, also beispielsweise bei einer Anfahrt parallel zur Laderampe.

Diese Funktion unterstützt den Fahrer des Fahrzeugs beträchtlich, da damit das Fahrzeug 1 korrekt relativ zur Laderampe 9 positioniert werden kann, um den Ladevorgang ohne störende Hindernisse, wie beispielsweise Bordsteinkanten oder dergleichen durchführen zu können.

Eine etwaige Deaktivierung der Bremsdruckanforderung spielt in einer solchen Situation keine Rolle, da die Anfahrt des Fahrzeugs mit Anhänger bei einem solchen Manöver üblicherweise parallel oder weitgehend parallel zur Laderampe 9 erfolgt.

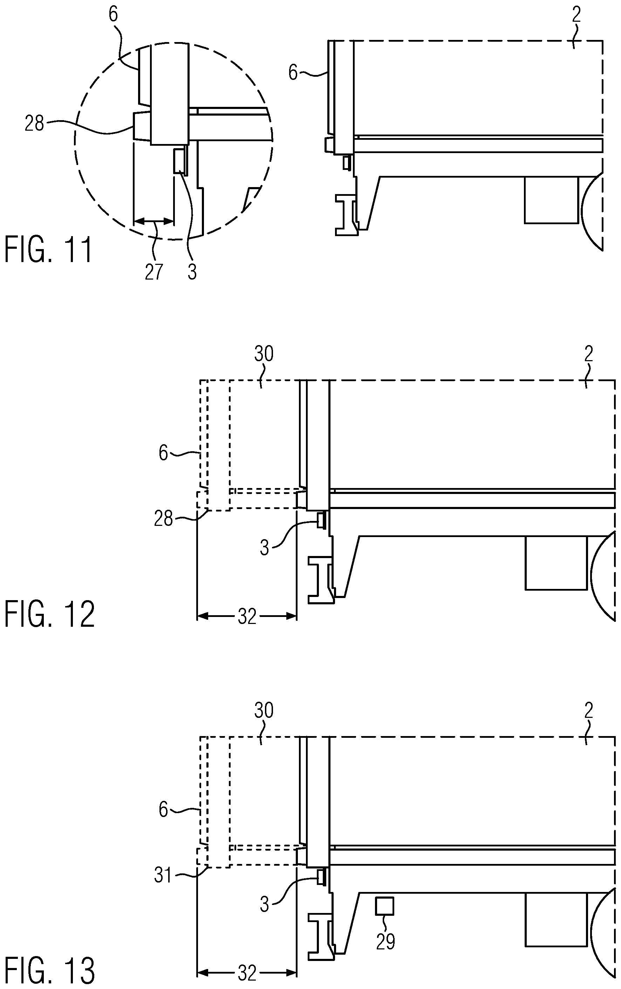

Fig. 11 der Zeichnung zeigt eine schematische Darstellung eines Teils eines Hecks 6 eines Anhängers 2 zur Erläuterung eines statischen Offsets.

Bei dem statischen Offset handelt es sich um einen Abstand, den der Montageort des Sensors 3 zur letzten Kante 28 des Hecks 6 des Anhängers 2 besitzt.

Dieser Abstand ist bei der Bestimmung des Abstands des Hecks des Anhängers 2 zum zu erfassenden Hindernis zu berücksichtigen.

Bei einem Anhänger 2, dessen Heck 6 relativ zum Anhänger 2 hinsichtlich des Abstands der letzten Kante 28 zum Sensor 3 verändert werden kann, handelt es sich um einen dynamischen Offset, wie dies anhand der Fig. 12 der Zeichnung schematisch ersichtlich ist, welche eine Darstellung ähnlich derjenigen nach Fig. 11 zur Erläuterung eines dynamischen Offsets zeigt.

Fig. 13 der Zeichnung zeigt eine Darstellung ähnlich derjenigen nach Fig. 12 zur Erläuterung eines variablen dynamischen Offsets. Der variable dynamische Offset kann dadurch zustande kommen, dass der Hecküberstand 30 des Anhängers 2 beispielsweise durch den Fahrer des Fahrzeugs während des Betriebs des Anhängers 2 verändert werden kann, beispielsweise aufgrund der Tatsache, dass während des Betriebs Ladungen mit unterschiedlicher Längserstreckung im Anhänger 2 transportiert werden müssen. Eine Veränderung des dynamischen Offsets kann durch das Steuergerät erfasst werden, wozu das Steuergerät im möglichen Eingangsspannungsbereich von beispielsweise 0 Volt bis beispielsweise 32 Volt zwei vorbestimmte Spannungsbereiche aufweist, nämlich einen unteren Spannungsbereich von 0 Volt bis 10 Volt für den analogen Messwert der Messeinrichtung und einen Bereich von größer 11 Volt, wobei das Überschreiten der Schwelle von 11 Volt als Schalteingang für die dynamische Umschaltung ausgelegt wird.

In einem solchen Fall kann dann der Fahrer des Fahrzeugs 1 und des Anhängers 2 den Hecküberstand 30 beispielsweise mittels einer am Anhänger 2 vorgesehenen Aktorik verändern. Eine am Anhänger 2 angeordnete Messeinrichtung kann dann den sich dynamisch verändernden Offsetabstand 32 eines Endabschnitts 31 zum Sensor 3 erfassen und an das Steuergerät 4 übermitteln. Der resultierende Abstandswert des Sensors 3 zum Hindernis ergibt sich dann unter Berücksichtigung des von der Messeinrichtung 29 erfassten Offsetabstands 32. Der Sensor 3 kann am Heck 6 des Anhängers 2 in unterschiedlichen Positionen angebaut werden. Die Anbauposition kann also auch am Heck 6 außermittig erfolgen, wobei hierzu die Breite des Anhängers 6 ausgewertet wird und mittels einer Konfigurationssoftware die Anbauposition des Sensors 3 am Heck 6 des Anhängers 2 ermittelt wird.

Das System kann auch eine nicht näher dargestellte Abdeckung für den Sensor 3 umfassen, womit dem rauen Betriebsalltag des Sensors 3 ein Schutz zur Verfügung gestellt wird. Darüber hinaus kann das Steuergerät 4 auch ein zur Selbstdiagnose eingerichtetes Computerprogrammprodukt umfassen, welches bei der Aktivierung der Rückwärtsfahrfunktion des Fahrzeugs 2 eine automatische Systemdiagnose durchführen kann, mit der alle Betriebsparameter des Systems auf Betriebsbereitschaft überprüft werden, also beispielsweise die extern angeschlossenen Aktoren, wie beispielsweise die hinteren Begrenzungsleuchten und die Betriebsbereitschaft des elektronischen Bremssystems des Anhängers. Der in Fig. 1 der Zeichnung schematisch dargestellte Computer kann mit einem Programmierkabel mit dem Steuergerät 4 des Systems verbunden werden, um die Betriebsbereitschaft des Systems überprüfen zu können, also beispielsweise die Querverkehrserkennung, ohne dass am Fahrzeug 2 die Rückwärtsfahrfunktion aktiviert werden muss. Diese Vorgehensweise ist beispielsweise bei einer nachträglichen Montage des erfindungsgemäßen Systems an einem bereits bestehenden Anhänger von Vorteil, also bei einer add-on Anwendung des erfindungsgemäßen Systems.

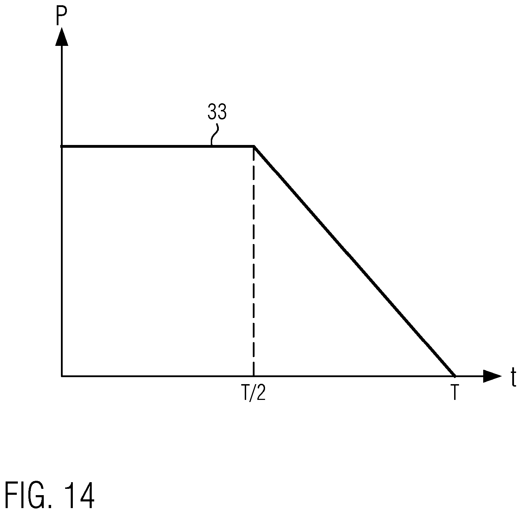

Fig. 14 der Zeichnung schließlich zeigt eine grafische Erläuterung des Lösens der Betriebsbremse des Anhängers beim Andockvorgang.

Wenn das Fahrzeug 1 zusammen mit dem Anhänger 2 eine Notbremsung ausgeführt hat oder auch dann, wenn das Fahrzeug mit dem Anhänger vor einem Hindernis zum Stillstand gekommen ist, wird diese den Stillstand des Fahrzeugs mit Anhänger herbeiführende Bremskraft durch das Steuergerät 4 für eine vorbestimmte Zeitdauer aufrechterhalten. Dieser Wert der Bremskraft entspricht dem in Fig. 14 mit dem Bezugszeichen 33 bezeichneten Bremskraftwert. Wie es anhand der Fig. 14 ersichtlich ist, wird dieser Bremskraftwert für eine vorbestimmte Zeit von beispielsweise vier Sekunden aufrechterhalten. Nach Ablauf dieses vorbestimmten Zeitfensters wird der Bremskraftwert während einer weiteren vorbestimmten Zeitdauer von beispielsweise vier Sekunden linear reduziert und zwar bis auf einen Bremskraftwert von Null.

Der Fahrer des Fahrzeugs wird hierüber beispielsweise davon in Kenntnis versetzt, dass die den Bremskraftwert 33 herbeiführende Druckluft im Druckluftbremssystem des Fahrzeugs reduziert wird, was er akustisch wahrnimmt. Nach Ablauf dieses zweiten Zeitfensters kann der Fahrer, sollte dies noch erforderlich sein, den letzten geringfügigen Abstand des Hecks des Anhängers 2 zur Rampe ohne automatischen, vom Steuergerät herbeigeführten Bremseneingriff durchführen.

Hinsichtlich vorstehend im Einzelnen nicht näher erläuterter Merkmale der Erfindung wird im Übrigen ausdrücklich auf die Patentansprüche und die Zeichnung verwiesen.

### Bezugszeichenliste

- 1.: Fahrzeug
- 2.: Anhänger
- 3.: Sensor
- 4.: Steuergerät
- 5.: elektronisches Bremssystem EBS
- 6.: Heck
- 7.: Beleuchtungseinrichtung
- 8.: Warnsignalgeber
- 9.: Hindernis
- 10.: System
- 11.: Computer
- 12.: Abstandsklasse
- 13.: Abstandsklasse ohne Bremseneingriff
- 14.: Erste Abstandsklasse
- 15.: Zweite Abstandsklasse
- 16.: Bereich, Detektionsbereich
- 17.: Bewegliches Objekt
- 18.: Symbol
- 19.: Symbol
- 20.: Beleuchtungseinrichtung
- 21.: Unterboden
- 22.: Aufbau
- 23.: Leuchtstreifen
- 24.: Fahrbahnoberfläche
- 25.: Beleuchtungseinrichtung
- 26.: Ladezone
- 27.: Statischer Offset
- 28.: Letzte Kante
- 29.: Messeinrichtung
- 30.: Hecküberstand
- 31.: Endabschnitt
- 32.: Offsetabstand
- 33.: Bremskraftwert

## Patentansprüche

1. Verfahren zur Unterstützung des Fahrers eines Fahrzeugs (1) mit Anhänger (2) bei der Rückwärtsfahrt, bei dem der Abstand eines Hecks (6) des Anhängers (2) zu einem Hindernis (9) mittels eines am Anhänger (2) vorgesehenen Sensors (3) festgestellt und in Abstandsklassen (12, 14, 15) unterteilt sowie ausgewertet wird und in Abhängigkeit von dem Abstand die Geschwindigkeit des Fahrzeugs (1) automatisch beeinflusst wird und mittels mindestens einer am Anhänger (2) vorgesehenen Beleuchtungseinrichtung (7) ein optisches Signal ausgegeben wird, welches durch unterschiedliche Blinkfrequenzen den verbleibenden Abstand zum Hindernis (9) repräsentiert, **dadurch gekennzeichnet, dass** beim Erreichen eines ersten Abstandswerts zum Hindernis (9) die Betriebsbremse des Anhängers (2) zur Bereitstellung einer ersten Bremskraft angesteuert wird und mit kleiner werdendem Abstand zum Hindernis (9) die Betriebsbremse des Anhängers (2) zur Bereitstellung zunehmender Bremskraft angesteuert wird und bei der Rückwärtsfahrt ein Detektionsbereich (16) hinterhalb des Hecks (6) des Anhängers (2) auf bewegliche Objekte (17) überwacht wird und bei der Erfassung eines beweglichen Objekts (17) in dem Detektionsbereich (16) die Betriebsbremse des Anhängers (2) zur Herbeiführung einer Notbremsung des Fahrzeugs (1) mit Anhänger (2) angesteuert wird.

2. Verfahren nach Anspruch 1, **dadurch gekennzeichnet, dass** innerhalb einer Abstandsklasse (14, 15) die jeweilige Bremskraft beibehalten wird und beim Wechsel zur nächsten Abstandsklasse (14, 15) mit kleinerem Abstand zum Hindernis als dem ersten Abstandswert die Betriebsbremse des Anhängers (2) zur Bereitstellung einer höheren Bremskraft angesteuert wird.

3. Verfahren nach Anspruch 1 oder 2, **dadurch gekennzeichnet, dass** die Feststellung des Abstands zum Hindernis (9) innerhalb eines Bereichs hinter dem Heck (6) des Anhängers (2) durchgeführt wird, der eine Breite aufweist, welche weitgehend der Breite der Fahrspur des Anhängers (2) entspricht.

4. Verfahren nach einem der vorstehenden Ansprüche, **dadurch gekennzeichnet, dass** der auf bewegliche Objekte (17) hinterhalb des Hecks (6) des Anhängers (2) überwachte Detektionsbereich (16) in Breitenrichtung und/oder in Längsrichtung größer ist als der Bereich hinterhalb des Hecks (6) des Anhängers (2) innerhalb dessen der Abstand zu einem Hindernis (9) festgestellt wird, so dass die Überwachung auf bewegliche Objekte (17) bei der Rückwärtsfahrt des Anhängers (2) bereits vor dem Erreichen des ersten Abstandswertes stattfindet.

5. Verfahren nach einem der vorstehenden Ansprüche, **dadurch gekennzeichnet, dass** ein bewegliches Objekt (17) in Abhängigkeit der vertikalen Höhe des Objekts und/oder der Relativgeschwindigkeit des Objekts als bewegliches Objekt (17) erkannt wird.

6. Verfahren nach einem der vorstehenden Ansprüche, **dadurch gekennzeichnet, dass** bei der Feststellung eines Hindernisses (9) in einer Abstandsklasse (13, 14, 15) ein sich in Abhängigkeit von der Abstandsklasse veränderndes optisches Signal mittels der Beleuchtungseinrichtung (7) ausgegeben wird.

7. Verfahren nach einem der vorstehenden Ansprüche, **dadurch gekennzeichnet, dass** bei der Feststellung eines beweglichen Objekts (17) im Detektionsbereich (16) ein akustisches Signal ausgegeben wird, welches sich von einem akustischen Signal bei der Rückwärtsfahrt unterscheidet.

8. Verfahren nach einem der vorstehenden Ansprüche, **dadurch gekennzeichnet, dass** bei der Feststellung eines Abstands zum Hindernis (9) entsprechend einer Abstandsklasse (15) mit geringstem Abstand zum Hindernis (9) die Betriebsbremse des Anhängers (2) zur Bereitstellung einer höheren Bremskraft als in anderen Abstandklassen (14) angesteuert wird und diese höhere Bremskraft für eine vorbestimmte Zeitdauer aufrechterhalten wird und die höhere Bremskraft nach Ablauf der vorbestimmten Zeitdauer auf eine niedrigere Bremskraft reduziert wird oder die Bremskraft aufgehoben wird.

9. Verfahren nach einem der vorstehenden Ansprüche, **dadurch gekennzeichnet, dass** bei der Rückwärtsfahrt eine am Anhänger (2) vorgesehene Beleuchtungseinrichtung (20) aktivierbar ist, welche der Breitenerstreckung des Anhängers entsprechende Leuchtstreifen (23) hinterhalb des Hecks (6) des Anhängers (2) auf die Fahrbahnoberfläche (24) projiziert.

10. Verfahren nach einem der vorstehenden Ansprüche, **dadurch gekennzeichnet, dass** bei der Rückwärtsfahrt eine am Anhänger (2) vorgesehene Beleuchtungseinrichtung (25) aktivierbar ist, welche einen weitgehend der Längserstreckung des Anhängers (2) entsprechenden Leuchtstreifen seitlich des Anhängers auf die Fahrbahnoberfläche (24) oder eine Ladezone (26) projiziert.

11. Verfahren nach einem der vorstehenden Ansprüche, **dadurch gekennzeichnet, dass** ein Abstand eines Endabschnitts (28) des Hecks (6) des Anhängers (2) zu dem Sensor (3) mittels einer Messeinrichtung (29) erfasst wird und von dem vom Sensor (3) ermittelten Abstand zum Hindernis (9) zur Ermittlung eines resultierenden Abstandswertes abgezogen wird und der resultierende Abstandswert zu seiner Einordnung in die Abstandsklasse (13, 14) verwendet wird.

12. Verfahren nach einem der vorstehenden Ansprüche, wobei die Feststellung des Abstands zum Hindernis (9) vom Fahrer des Fahrzeugs (1) deaktivierbar ist, **dadurch gekennzeichnet, dass** ein vom Fahrer herbeigeführtes und vom Fahrzeug (1) bereitgestelltes Rückwärtsfahrsignal und ein vom Fahrer herbeigeführtes und vom Fahrzeug (1) bereit gestelltes Lichtsignal ausgewertet werden und die Deaktivierung beim Vorliegen beider Signale innerhalb eines vorbestimmten Zeitintervalls stattfindet.

13. Verfahren nach Anspruch 12, **dadurch gekennzeichnet, dass** als Lichtsignal ein ein Nebelschlusslicht des Fahrzeugs (1) und/oder des Anhängers (2) aktivierendes Lichtsignal verwendet wird.

14. System zur Durchführung des Verfahrens nach einem der vorstehenden Ansprüche, mit einem Sensor (3) und einer Steuereinrichtung (4), wobei der Sensor (3) zur Bereitstellung eines den Abstand des Sensors (3) zu einem Hindernis (9) darstellenden Sensorsignals eingerichtet ist und die Steuereinrichtung (4) zur Ermittlung des Abstands des Sensors (3) zum Hindernis (9) auf Basis des Sensorsignals und zur Unterteilung des Abstands in Abstandsklassen (12, 13, 14) und zur Beeinflussung eines elektronischen Bremssystems (5) eines Fahrzeuganhängers (2) eingerichtet ist, und das System eine Beleuchtungseinrichtung (7) aufweist, welche zur Abgabe eines optischen Signals eingerichtet ist, welches durch unterschiedliche Blinkfrequenzen den Abstand zum Hindernis (9) repräsentiert, **dadurch gekennzeichnet, dass** das System (10) zur Anordnung an dem Fahrzeuganhänger (2) eingerichtet ist.

15. System nach Anspruch 14, welches zur Durchführung des Verfahrens nach Anspruch 5 eingerichtet ist, **dadurch gekennzeichnet, dass** das System (10) zur Erkennung eines beweglichen Objekts (17) eingerichtet ist, welches eine Relativgeschwindigkeit zum Fahrzeuganhänger (2) oder Sensor (3) von mindestens 1.5 Meter/Sekunde aufweist.

16. System nach Anspruch 14 oder 15, welches zur Durchführung des Verfahrens nach Anspruch 12 eingerichtet ist, **dadurch gekennzeichnet, dass** es zur optischen Visualisierung des deaktivierten Zustands der Feststellung des Abstands zum Hindernis die Beleuchtungseinrichtung (7) mit einer sich von der Blinkfrequenz bei der Rückwärtsfahrt unterscheidenden Blinksequenz ansteuert.

17. System nach einem der Ansprüche 14 bis 16 und mit einer autarken elektrischen Energiequelle, **dadurch gekennzeichnet, dass** das System (10) zur Ausgabe eines optischen Signals eingerichtet ist, welches durch unterschiedliche Blinkfrequenzen den verbleibenden Abstand eines vom Fahrzeug (1) getrennten und mittels eines Manipulators bewegten Anhängers (2) zu einem Hindernis (9) repräsentiert.

18. System nach einem der Ansprüche 14 bis 17, welches zur Durchführung des Verfahrens nach Anspruch 9 eingerichtet ist, **gekennzeichnet, durch** eine Beleuchtungseinrichtung (20), welche zur Projektion von der Breitenerstreckung eines Anhängers (2) entsprechender Leuchtstreifen (23) auf die Fahrbahnoberfläche (24) eingerichtet ist.

19. System nach einem der Ansprüche 14 bis 18, welches zur Durchführung des Verfahrens nach Anspruch 10 eingerichtet ist, **gekennzeichnet durch** eine Beleuchtungseinrichtung (25), welche zur Projektion eines weitgehend der Längserstreckung eines Anhängers (2) entsprechenden Leuchtstreifens auf die Fahrbahnoberfläche (24) oder eine Ladezone (26) eingerichtet ist.
